(19) Europäisches Patentamt
European Patent Office
Office européen des brevets

(11) EP 3 802 696 B1

(12) FASCICULE DE BREVET EUROPEEN

(45) Date de publication et mention de la délivrance du brevet:
**05.07.2023 Bulletin 2023/27**

(21) Numéro de dépôt: **19739326.7**

(22) Date de dépôt: **23.05.2019**

(51) Classification Internationale des Brevets (IPC):
***C08L 33/06*** *(2006.01)* ***C10M 145/14*** *(2006.01)*
***C10M 155/04*** *(2006.01)* ***C08L 43/00*** *(2006.01)*

(52) Classification Coopérative des Brevets (CPC):
(C-Sets disponibles)
**C08L 33/066; C08L 43/00; C10M 145/14; C10M 155/04;** C10M 2205/04; C10M 2209/084; C10N 2030/02 (Cont.)

(86) Numéro de dépôt international:
**PCT/FR2019/051189**

(87) Numéro de publication internationale:
**WO 2019/224492 (28.11.2019 Gazette 2019/48)**

# (54) OLIGOMÈRES ASSOCIATIFS ET ÉCHANGEABLES, COMPOSITION LES COMPRENANT

ASSOZIATIVE UND AUSTAUSCHBARE OLIGOMERE, ZUSAMMENSETZUNG DAMIT

ASSOCIATIVE AND EXCHANGEABLE OLIGOMERS, COMPOSITION COMPRISING THEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2018 FR 1854407**

(43) Date de publication de la demande:
**14.04.2021 Bulletin 2021/15**

(73) Titulaire: **TotalEnergies OneTech**
**92400 Courbevoie (FR)**

(72) Inventeurs:
- **DESCROIX, Gregory**
  **69126 BRINDAS (FR)**
- **BRIAND, Fanny**
  **69003 LYON (FR)**

(74) Mandataire: **Corizzi, Valérie**
**PACT-IP**
**37, rue Royale**
**92210 Saint-Cloud (FR)**

(56) Documents cités:
**WO-A1-2015/110643**
**FR-A1- 3 016 885**
**FR-A1- 3 016 887**
**FR-A1- 3 031 744**
**US-A- 5 691 284**

EP 3 802 696 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08L 33/066, C08L 43/00;**
**C08L 43/00, C08L 33/066;**
C10M 2209/084, C10N 2060/14

## Description

L'invention concerne une composition résultant du mélange d'au moins un oligomère A1, fonctionnalisé par des fonctions diols et comprenant éventuellement des unités répétitives correspondant à au moins un monomère styrénique, et d'au moins un composé A2 comprenant au moins deux fonctions esters boroniques. De telles compositions présentent des propriétés rhéologiques très variées selon la proportion des composés A1 et A2 utilisée. L'invention concerne aussi une composition résultant du mélange d'au moins une huile lubrifiante avec une telle composition et l'utilisation de cette composition pour lubrifier une pièce mécanique. Le domaine de l'invention est celui des polymères associatifs et échangeables et celui des lubrifiants. La composition lubrifiante selon l'invention présente de bonnes propriétés d'économie de carburant mais également de résistance à la dégradation mécanique.

## Etat de la technique antérieure

Les polymères de hautes masses molaires sont largement utilisés pour augmenter la viscosité de solutions dans de nombreux domaines, tels que l'industrie du pétrole, du papier, du traitement de l'eau, l'industrie minière, des cosmétiques, du textile et de manière générale dans toutes les techniques industrielles utilisant des solutions épaissies.

Les compositions lubrifiantes, et plus particulièrement les compositions lubrifiantes pour moteur, sont connues comme pouvant comprendre différents types d'additifs, permettant d'apporter à la composition des propriétés particulières. Suite à l'établissement du protocole de Kyoto, de nouvelles normes protégeant l'environnement imposent à la filière de l'automobile de construire des véhicules dont les émissions polluantes et les consommations de carburant sont réduites. Il en résulte que les moteurs de ces véhicules sont soumis à des contraintes techniques de plus en plus sévères : ils tournent notamment plus vite, à des températures de plus en plus élevées et doivent consommer de moins en moins de carburant. La nature des lubrifiants moteurs pour automobiles a une influence sur l'émission de polluants et sur la consommation de carburant. Des lubrifiants moteurs pour automobiles dits économiseurs d'énergie ou « fuel-eco » (en terminologie anglo-saxonne), ont été développés pour satisfaire ces nouveaux besoins.

On connaît par les demandes WO2015/110642, WO2015/110643 et WO2016113229 une composition résultant du mélange d'au moins un copolymère A1 résultant de la copolymérisation d'au moins un monomère fonctionnalisé par des fonctions diols et d'au moins un composé A2 comprenant au moins deux fonctions esters boroniques. Ces composés peuvent s'associer, pour former éventuellement un gel, et échanger des liens chimiques de manière thermoréversible. Ces additifs présentent l'avantage de diminuer la baisse de viscosité de la solution les comprenant lorsque la température augmente. Ces compositions de polymères présentent des propriétés rhéologiques très variées selon la proportion des composés A1 et A2 utilisée. Elles peuvent en outre comprendre un composé diol qui permet de mieux contrôler l'association des deux copolymères.

En particulier, ces compositions de polymères peuvent être ajoutées dans une huile lubrifiante pour lubrifier une pièce mécanique. Ces copolymères permettent de formuler des compositions lubrifiantes dont la viscosité est mieux contrôlée par rapport aux compositions lubrifiantes de l'art antérieur. En particulier, ces copolymères, lorsqu'ils sont introduits dans une huile de base, tendent à faire diminuer la chute de viscosité du mélange lorsque la température augmente. La présence d'un composé diol dans ces compositions lubrifiantes permet de mieux moduler leur viscosité.

Les compositions lubrifiantes sont des compositions appliquées entre les surfaces, notamment métalliques, de pièces mobiles. Elles permettent de réduire le frottement et l'usure entre deux pièces en contact et en mouvement l'une par rapport à l'autre. Elles servent également à dissiper une partie de l'énergie thermique engendrée par ce frottement. Les compositions lubrifiantes forment un film protecteur entre les surfaces des pièces sur lesquelles elles sont appliquées.

Les compositions utilisées pour la lubrification de pièces mécaniques sont généralement constituées d'une huile de base et d'additifs. L'huile de base, notamment d'origine pétrolière ou synthétique, présente des variations de viscosité lorsqu'on fait varier la température.

En effet, lorsque la température d'une huile de base augmente, sa viscosité diminue et lorsque la température de l'huile de base diminue, sa viscosité augmente. Or, en régime de lubrification hydrodynamique, l'épaisseur du film protecteur est proportionnelle à la viscosité, donc dépend aussi de la température. Une composition présente de bonnes propriétés lubrifiantes si l'épaisseur du film protecteur reste sensiblement constante quelles que soient les conditions et la durée d'utilisation du lubrifiant.

Dans un moteur à combustion interne, une composition lubrifiante peut être soumise à des changements de température externes ou internes. Les changements de température externes sont dus aux variations de température de l'air ambiant, telles que les variations de température entre l'été et l'hiver par exemple. Les changements de température internes résultent de la mise en oeuvre du moteur. La température d'un moteur est plus basse lors de sa phase de démarrage, notamment par temps froid, que lors d'une utilisation prolongée. Par conséquent, l'épaisseur du film protecteur peut varier dans ces différentes situations.

Il existe donc un besoin de disposer d'une composition lubrifiante possédant de bonnes propriétés de lubrification et dont la viscosité est peu sujette aux variations de température.

Il est connu d'ajouter des additifs améliorant la viscosité d'une composition lubrifiante. Ces additifs ont pour fonction de modifier le comportement rhéologique de la composition lubrifiante. Ils permettent de favoriser une plus grande stabilité de la viscosité sur une plage de température à laquelle la composition lubrifiante est utilisée. Par exemple, ces additifs limitent la diminution de la viscosité de la composition lubrifiante lorsque la température s'élève, tout en limitant l'augmentation de la viscosité à froid.

Les additifs améliorant la viscosité (ou additifs améliorant l'indice de viscosité) permettent de garantir une bonne lubrification en limitant l'impact sur la viscosité à froid et en garantissant une épaisseur minimale de film à chaud. Les additifs améliorant la viscosité actuellement utilisés sont des polymères tels que les oléfines copolymères (OCP) et les polyméthacrylates d'alkyles (PMA) Ces polymères sont de hautes masses molaires. En général, la contribution de ces polymères au contrôle de la viscosité est d'autant plus importante que leur poids moléculaire est élevé.

Cependant, les polymères de hautes masses molaires présentent l'inconvénient d'avoir une faible résistance au cisaillement permanent par rapport aux polymères de même nature et de même architecture mais de taille plus faible.

Or, une composition lubrifiante est soumise à des contraintes de cisaillement importantes notamment dans les moteurs à combustion interne, où les surfaces en frottement ont un écartement très faible et les pressions exercées sur les pièces sont élevées. Ces contraintes de cisaillement sur les polymères de hautes masses molaires entrainent des coupures au niveau des chaînes macromoléculaires. Le polymère ainsi dégradé voit ses propriétés épaississantes réduites, et la viscosité chute de manière irréversible. Cette faible résistance au cisaillement permanent conduit donc à une dégradation des propriétés de lubrification de la composition lubrifiante.

Enfin, on a cherché à mettre au point des compositions présentant une meilleure stabilité à l'oxydation, en particulier une meilleure résistance à l'oxydation par les radicaux libres.

Les compositions décrites dans les demandes WO2015/110642, WO2015/110643 et WO2016113229 présentent des propriétés très intéressantes, du fait de leur capacité à former des associations thermoréversibles. Toutefois, on a constaté que dans certaines conditions, de température élevée notamment, le comportement associatif de ces copolymères diminuait. En particulier, on a observé une baisse de l'indice de viscosité des compositions lubrifiantes les comprenant, une moins bonne résistance au cyclage (que l'on peut définir comme la succession de séquences d'élévation et de diminution de la température comme elle est observée dans un moteur), entraînant une perte des propriétés lubrifiantes au cours du temps.

Aussi, la demanderesse s'est fixée pour objectif la préparation de nouveaux copolymères présentant des propriétés améliorées par rapport aux copolymères de l'art antérieur.

Cet objectif est atteint grâce à de nouveaux additifs rhéologiques pouvant s'associer, pour éventuellement former un gel, et s'échanger. Les additifs de la présente invention présentent l'avantage d'épaissir le milieu dans lequel ils sont dispersés et conservent cet avantage à des températures élevées, comme par exemple jusqu'à 150°C. Ces additifs présentent une résistance à la dégradation chimique lors d'une élévation de température par rapport aux additifs de l'art antérieur. Les compositions lubrifiantes les comprenant présentent une meilleure stabilité de leurs performances au cyclage et une meilleure reproductibilité des propriétés lubrifiantes au cours du temps.

Cette caractéristique résulte de l'utilisation combinée de deux composés particuliers, un oligomère portant des fonctions diol et éventuellement des fonctions styréniques et un composé comprenant des fonctions esters boroniques.

Il est possible, grâce aux compositions de l'invention de fournir des compositions lubrifiantes qui possèdent de bonnes propriétés de lubrification lors des phases de démarrage d'un moteur (phase à froid) et des bonnes propriétés de lubrification lorsque le moteur fonctionne à sa température de service (phase à chaud). Ces compositions lubrifiantes permettent de réduire la consommation de carburant d'un véhicule les mettant en oeuvre. Elles présentent une meilleure tenue à la dégradation mécanique que les compositions de l'art antérieur.

## Résumé de l'invention

L'invention, telle que définie dans les revendications en annexe, concerne une composition résultant du mélange d'au moins

- un oligomère polydiol A1 de masse molaire moyenne en nombre supérieure ou égale à 600 g/mol et inférieure à 10 000 g/mol comprenant des unités répétitives correspondant à :
  - au moins deux monomères M1,
    et
  - au moins un monomère M2, ou
  - au moins un monomère M3, ou
  - au moins un monomère M2 et au moins un monomère M3,
    et l'oligomère A1 comprend moins de 2 % molaire d'unités répétitives correspondant à un ou plusieurs monomères M3,
et

◦ un composé A2 comprenant au moins deux fonctions ester boronique,

- le monomère M1 répondant à la formule générale (I) :

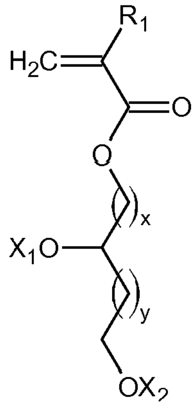

(I)

dans laquelle :

- $R_1$ est choisi parmi le groupe formé par -H, $-CH_3$, et $-CH_2-CH_3$ ;
- x est un nombre entier allant de 1 à 18, de préférence de 2 à 18 ;
- y est un nombre entier égal à 0 ou 1;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;
ou bien
- $X_1$ et $X_2$ forment avec les atomes d'oxygène un pont de formule suivante

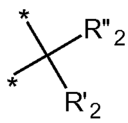

dans laquelle:

- les étoiles (*) symbolisent les liaisons aux atomes d'oxygène,
- $R'_2$ et $R''_2$, identiques ou différents, sont choisis parmi le groupe formé par l'hydrogène et un alkyle en $C_1$-$C_{11}$, de préférence le méthyle ;
ou bien
- $X_1$ et $X_2$ forment avec les atomes d'oxygène un ester boronique de formule suivante :

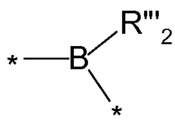

dans laquelle :

- les étoiles (*) symbolisent les liaisons aux atomes d'oxygène,
- $R'''_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$;

- le monomère M2 répondant à la formule générale (II) :

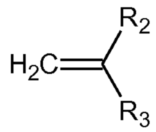

(II)

dans laquelle :

- $R_2$ est choisi parmi le groupe formé par -H, $-CH_3$ et $-CH_2-CH_3$,
- $R_3$ est choisi parmi le groupe formé par : -C(O)-O-R'$_3$ ; -O-R'$_3$ ; -S-R'$_3$ et -C(O)-N(H)-R'$_3$ avec R'$_3$ un groupe alkyle en $C_1$-$C_{30}$,

- le monomère M3 répondant à la formule générale (X) :

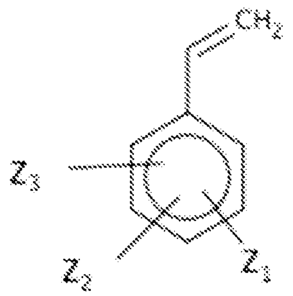

(X)

dans laquelle :

- $Z_1$, $Z_2$, $Z_3$, identiques ou différents, représentent des groupements choisis parmi un atome d'hydrogène, un alkyle en $C_1$-$C_{12}$, un groupement -OZ', -C(O)-O-Z' avec Z' un alkyle en $C_1$-$C_{12}$.

Selon un mode de réalisation préféré, l'oligomère A1 présente une masse molaire moyenne en nombre allant de 600 g/mol à 9500 g/mol.

Selon un mode de réalisation préféré, l'oligomère A1 comprend moins de 1,5 % molaire d'unités répétitives correspondant à un ou plusieurs monomères M3 de formule générale (X).

Selon un mode de réalisation préféré, le monomère M3 est le styrène.

Selon un mode de réalisation préféré, les chaînes latérales de l'oligomère A1 ont une longueur moyenne allant de 8 à 20 atomes de carbone, de préférence de 9 à 18 atomes de carbone.

Selon un mode de réalisation préféré, l'oligomère A1 a un pourcentage molaire d'unités répétitives correspondant au monomère M1 de formule (I) dans ledit copolymère allant de 2 à 70%, de préférence de 4 à 50%.

Selon un mode de réalisation préféré, l'oligomère A1 a un degré de polymérisation moyen en nombre allant de 3 à 100, de préférence de 3 à 50.

Selon un mode de réalisation préféré, l'oligomère A1 a un indice de polydispersité (Ip) allant de 1,05 à 4,0 ; de préférence allant de 1,10 à 3,8.

Selon un premier mode de réalisation préféré, le composé A2 est un composé de formule (III) :

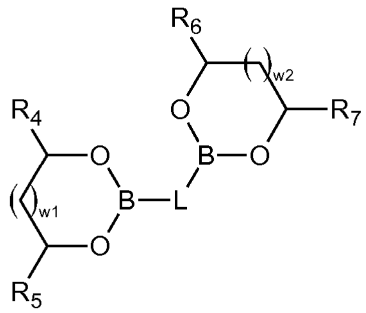

(III)

dans laquelle :

- $w_1$ et $w_2$, identiques ou différents sont des nombres entiers choisis entre 0 et 1 ;
- $R_4$, $R_5$, $R_6$ et $R_7$, identiques ou différents représentent un groupement choisi parmi un atome d'hydrogène, un groupement hydrocarboné comprenant de 1 à 30 atomes de carbone, de préférence entre 4 et 18 atomes de carbone, encore plus préférentiellement entre 6 et 14 atomes de carbone, ledit groupement hydrocarboné étant éventuellement substitué par un ou plusieurs groupements choisis parmi : un hydroxyle, un groupement -OJ, -C(O)-O-J avec J un groupement hydrocarboné comprenant de 1 à 24 atomes de carbone ;
- L est un groupement de liaison divalent et choisi parmi le groupe formé par un aryle en $C_6$-$C_{18}$, un aralkyle en $C_7$-$C_{24}$ et une chaîne hydrocarbonée en $C_2$-$C_{24}$.

Selon un autre mode de réalisation préféré, le composé A2 est un oligomère résultant de la copolymérisation

- d'au moins deux monomères M4 de formule (IV) :

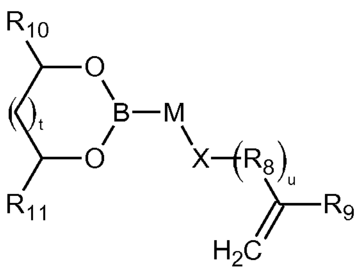

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, choisis parmi le groupe formé par un aryle en $C_6$-$C_{18}$, un aralkyle en $C_7$-$C_{24}$ et un alkyle en $C_2$-$C_{24}$, de préférence un aryle en $C_6$-$C_{18}$;
- X est une fonction choisie parmi le groupe formé par -O-C(O)-, - C(O)-O-, -C(O)-N(H)-, -N(H)-C(O)-, -S- , -N(H)- , -N(R'$_4$)- et -O- avec R'$_4$ une chaîne hydrocarbonée comprenant de 1 à 15 atomes de carbone;
- $R_9$ est choisi parmi le groupe formé par -H, $-CH_3$ et$-CH_2-CH_3$ ;
- $R_{10}$ et $R_{11}$ identiques ou différents représentent un groupement choisi parmi un atome d'hydrogène, un groupement hydrocarboné comprenant de 1 à 30 atomes de carbone, de préférence entre 4 et 18 atomes de carbone, encore plus préférentiellement entre 6 et 14 atomes de carbone, ledit groupement hydrocarboné étant éventuellement substitué par un ou plusieurs groupements choisis parmi : un hydroxyle, un groupement -OJ, -C(O)-O-J avec J un groupement hydrocarboné comprenant de 1 à 24 atomes de carbone ; avec

- Eventuellement au moins un monomère M5 de formule générale (V) :

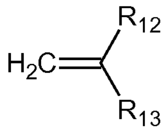

(V)

dans laquelle :

- $R_{12}$ est choisi parmi le groupe formé par -H, $-CH_3$ et $-CH_2-CH_3$, $R_{13}$ est choisi parmi le groupe formé par -C(O)-O-R'$_{13}$ ; -O-R'$_{13}$, -S-R'$_{13}$ et-C(O)-N(H)-R'$_{13}$, avec R'$_{13}$ un groupe alkyle en $C_1$-$C_{30}$,

- Eventuellement, au moins un monomère M3 de formule générale (X) :

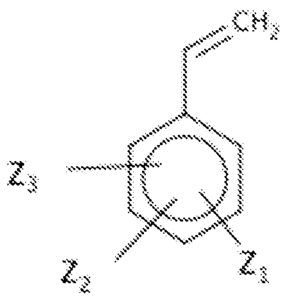

(X)

dans laquelle :

- $Z_1$, $Z_2$, $Z_3$, identiques ou différents, représentent, des groupements choisis parmi un atome d'hydrogène, un alkyle en $C_1$-$C_{12}$, un groupement -OZ', -C(O)-O-Z' avec Z' un alkyle en $C_1$-$C_{12}$.

Selon un mode de réalisation préféré, l'oligomère A2 présente une masse molaire moyenne en nombre allant de 600 g/mol à moins de 10 000 g/mol, de préférence de 600 à 9500 g/mol, encore mieux de 600 à 5000 g/mol.

Selon un mode de réalisation préféré, dans l'oligomère A2, l'une au moins des deux conditions suivantes est réalisée :

- soit dans la formule (IV) : u = 1, $R_9$ est H et $R_8$ représente un aryle en $C_6$-$C_{18}$ ou un aralkyle en $C_7$-$C_{24}$ et la double liaison du monomère M4 de formule (IV) est directement connectée au groupement aryle ;
- soit le copolymère A2 comprend au moins un monomère M3 de formule (X).

Avantageusement, lorsque A2 comprend un monomère M3 de formule (X), ce monomère M3 est le styrène.

Avantageusement, l'oligomère ester boronique A2 a un pourcentage molaire de monomère(s) styrénique(s), avantageusement du styrène, de formule (IV) et/ou (X), dans ledit copolymère allant de 2 à 50% molaire, préférentiellement de 3 à 40%, de manière plus préférée de 5 à 35% molaire.

Selon un mode de réalisation avantageux, dans l'oligomère A2, la chaîne formée par l'enchaînement des groupes $R_{10}$, M, X et $(R_8)_u$ avec u égal à 0 ou 1 du monomère de formule générale (IV) présente un nombre total d'atomes de carbone allant de 8 à 38, de préférence de 10 à 26.

Selon un mode de réalisation avantageux, les chaînes latérales de l'oligomère A2 ont une longueur moyenne supérieure ou égale à 8 atomes de carbone, de préférence allant de 11 à 16 atomes de carbone.

Selon un mode de réalisation avantageux, l'oligomère A2 a un pourcentage molaire de monomère M4 de formule (IV) dans ledit oligomère allant de 4 à 50%, de préférence de 4 à 30%.

Selon un mode de réalisation avantageux, l'oligomère A2 a un degré de polymérisation moyen en nombre allant de 2 à 100, de préférence de 2 à 50.

Selon un mode de réalisation avantageux, l'oligomère A2 a un indice de polydispersité (Ip) allant de 1,04 à 3,54 ; de préférence allant de 1,10 à 3,10.

Selon un mode de réalisation préféré, la teneur en oligomère A1 va de 0,1% à 50% en poids par rapport au poids total de la composition.

Selon un mode de réalisation préféré, la teneur en composé A2 va de 0,1% à 50% en poids par rapport au poids total de la composition.

Selon un mode de réalisation préféré, le ratio massique entre l'oligomère A1 et le composé A2 (ratio A1/A2) va de 0,002 à 500, de préférence de 0,05 à 20, de manière encore plus préférée de 0,1 à 10.

Selon un mode de réalisation préféré, l'oligomère A1 a été obtenu par un procédé comprenant au moins :

- une étape de polymérisation radicalaire contrôlée par transfert de chaîne réversible par addition-fragmentation en présence d'un agent de transfert de type thiocarbonylthio.

Selon un mode de réalisation encore préféré, l'oligomère A1 a été obtenu par un procédé comprenant au moins après la polymérisation :

- une étape d'aminolyse du résidu thiocarbonylthio en thiol, suivie de
- une addition de Michael sur un acrylate pour transformer le thiol en thioéther.

Selon un mode de réalisation préféré, la composition comprend en outre au moins un composé exogène A4 choisi parmi les polyols.

Selon un mode de réalisation préféré, le pourcentage molaire de composé exogène A4 par rapport aux fonctions ester boronique du composé A2 va de 0,025 à 5000%, de préférence va de 0,1% à 1000%, de manière encore plus préférée de 0,5% à 500%, de manière encore plus préférée de 1% à 150%.

Selon un autre mode de réalisation préféré, la composition comprend en outre au moins un composé exogène A5 choisi parmi ceux répondant à la formule (XI) :

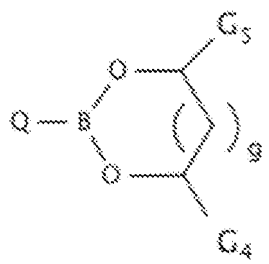

(XI)

dans laquelle :

- Q représente un groupement choisi parmi un groupement hydrocarboné comprenant de 1 à 30 atomes de carbone, éventuellement substituée par un ou plusieurs groupements choisis parmi : un hydroxyle, un groupement -OJ, -C(O)-O-J avec J un groupement hydrocarboné comprenant de 1 à 24 atomes de carbone,
- $G_4$, $G_5$, identiques ou différents, représentent des groupements choisis parmi un atome d'hydrogène, une chaîne hydrocarbonée comprenant de 1 à 24 atomes de carbone, un hydroxyle, un groupement -OJ, -C(O)-O-J avec J un groupement hydrocarboné comprenant de 1 à 24 atomes de carbone,
- g représente 0 ou 1.

Selon un mode de réalisation préféré, le pourcentage molaire de composé exogène A5 par rapport aux fonctions diol de l'oligomère A1 va de 0,025 à 5000%, de préférence va de 0,1% à 1000%, de manière encore plus préférée de 0,5% à 500%, de manière encore plus préférée de 1% à 150%.

L'invention concerne également une composition lubrifiante résultant du mélange d'au moins :

- une huile lubrifiante ; et
- une composition telle que définie ci-dessus et de façon détaillée dans la description ci-dessous.

Selon un mode de réalisation préféré, l'huile lubrifiante est choisie parmi les huiles du groupe I, du groupe II, du groupe III, du groupe IV, du groupe V de la classification API et l'un de leur mélange.

Selon un mode de réalisation préféré, la composition lubrifiante résulte du mélange avec en outre un additif fonctionnel choisi parmi le groupe formé par les antioxydants, les détergents, les additifs anti-usure, les additifs extrême pression, les polymères améliorant l'indice de viscosité, les améliorants de point d'écoulement, les anti-mousses, les additifs anticorrosion, les épaississants, les dispersants, les modificateurs de frottements et leurs mélanges.

L'invention concerne en outre un procédé pour moduler la viscosité d'une composition lubrifiante, le procédé

comprenant au moins :

- la fourniture d'une composition telle que définie ci-dessus et de façon détaillée dans la description ci-dessous,
- le mélange de cette composition avec une huile lubrifiante.

L'invention concerne aussi l'utilisation d'une composition lubrifiante telle que définie ci-dessus et de façon détaillée ci-dessous pour réduire la consommation de carburant de véhicules.
L'invention concerne aussi l'utilisation d'une composition lubrifiante telle que définie ci-dessus et de façon détaillée ci-dessous pour augmenter la durabilité mécanique du lubrifiant.
L'invention concerne également un procédé de réduction des pertes d'énergie par frottement d'une pièce mécanique comprenant au moins une étape de mise en contact d'une pièce mécanique avec une composition lubrifiante telle que définie ci-dessus et de façon détaillée ci-dessous.
Elle concerne aussi un procédé pour réduire la consommation de carburant d'un véhicule comprenant au moins une étape de mise en contact d'une pièce mécanique du moteur du véhicule avec une composition lubrifiante telle que définie ci-dessus et de façon détaillée ci-dessous.

**Description détaillée**

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.
L'expression « compris entre X et Y » inclut les bornes, sauf mention contraire explicite. Cette expression signifie donc que l'intervalle visé comprend les valeurs X, Y et toutes les valeurs allant de X à Y.

➢ Définitions :

Par « oligomère », on entend une macromolécule constituée d'un nombre limité d'unités de répétitions. Ces unités de répétitions peuvent être toutes identiques ou un oligomère peut comprendre des unités de répétitions différentes. Généralement un oligomère comprend de 2 à 100 unités de répétition et une masse molaire moyenne en nombre supérieure ou égale à 600 g/mol et inférieure ou égale à 10 000 g/mol.
Par « copolymère », on entend un oligomère ou une macromolécule linéaire ou ramifiée ayant une séquence constituée de plusieurs unités répétitives (ou motif monomère) dont au moins deux unités ont une structure chimique différente.
Par « motif monomère » ou « monomère », on entend une molécule capable d'être convertie en un oligomère ou une macromolécule par combinaison avec lui-même ou avec d'autres molécules du même type. Un monomère désigne la plus petite unité constitutive dont la répétition conduit à un oligomère ou à une macromolécule.
Par « copolymère ou oligomère statistique », on entend une macromolécule dans lequel la distribution séquentielle des motifs monomères obéit à des lois statistiques connues. Par exemple, un copolymère ou un oligomère est dit statistique lorsqu'il est constitué par des motifs monomères dont la distribution est markovienne. Un copolymère statistique schématique (P1) est illustré en figure 1. La distribution dans la chaîne polymère des motifs monomères dépend de la réactivité des fonctions polymérisables des monomères et de la concentration relative des monomères.
Par « copolymère ou oligomère à blocs », on entend une macromolécule qui comprend un ou plusieurs blocs ou qui est constituée de blocs. Par « bloc » on désigne une partie d'un copolymère comprenant plusieurs motifs monomères identiques ou différents et qui possèdent au moins une particularité de constitution ou de configuration permettant de la distinguer de ses parties adjacentes. Un copolymère à blocs schématique (P3) est illustré en figure 1.
Un « copolymère ou oligomère à gradient » désigne une macromolécule d'au moins deux motifs monomères de structures différentes dont la composition en monomère change de façon graduelle le long de la chaîne, passant ainsi de façon progressive d'une extrémité de la chaîne polymère riche en un motif monomère, à l'autre extrémité riche en l'autre comonomère. Un polymère à gradient schématique (P2) est illustré en figure 1.
Les oligomères polydiols de l'invention peuvent être des oligomères statistiques ou des oligomères à gradients ou des oligomères à blocs.
Les oligomères poly(ester boronique) de l'invention peuvent être des oligomères statistiques ou des oligomères à gradients ou des oligomères à blocs.
Par « copolymérisation », on entend un procédé qui permet de convertir un mélange d'au moins deux motifs monomères de structures chimiques différentes en un oligomère ou en un copolymère.
Dans la suite de la présente demande, « B » représente un atome de bore.
Par « alkyle en $C_i$-$C_j$ » on entend une chaîne hydrocarbonée saturée, linéaire ou ramifiée, comprenant de i à j atomes de carbone. Par exemple, pour « alkyle en $C_1$-$C_{10}$ », on entend une chaîne hydrocarbonée saturée, linéaire

ou ramifiée, comprenant de 1 à 10 atomes de carbone.

Par « aryle en $C_x$-$C_y$ », on entend un groupe fonctionnel qui dérive d'un composé hydrocarboné aromatique comprenant de x à y atomes de carbone. Ce groupe fonctionnel peut être monocyclique ou polycyclique. A titre illustratif, un aryle en $C_6$-$C_{18}$ peut être le phényle, le naphtalène, l'anthracène, le phénanthrène et le tétracène.

Par « alcényle en $C_x$-$C_y$ », on entend une chaîne hydrocarbonée linéaire ou ramifiée comportant au moins une insaturation, de préférence une double liaison carbone-carbone, et comprenant de x à y atomes de carbone.

Par « aralkyle en $C_x$-$C_y$ », on entend un composé hydrocarboné aromatique, de préférence monocyclique, substitué par au moins une chaîne alkyle linéaire ou ramifiée et dont le nombre total d'atomes de carbone du cycle aromatique et de ses substituants va de x à y atomes de carbone. A titre illustratif un aralkyle en $C_7$-$C_{18}$ peut être choisi dans le groupe formé par le benzyle, le tolyle et le xylyle.

Par groupe « aryle en $C_x$-$C_y$ substitué par un groupement Y », on entend un composé hydrocarboné aromatique, de préférence monocyclique, comprenant de x à y atomes de carbone dont au moins un atome de carbone du cycle aromatique est substitué par un groupe Y.

Par « Hal » ou « halogène » on entend un atome d'halogène choisi parmi le groupe formé par le chlore, le brome, le fluor et l'iode.

Dans la description, lorsque l'on indique qu'un copolymère ou un oligomère « comprend des unités répétitives correspondant à un monomère $M_i$ », cela signifie qu'il peut résulter directement de la copolymérisation du monomère $M_i$, et i représente un indice identifiant les différents monomères illustrés ci-dessous, avec d'autres comonomères, mais aussi qu'il peut avoir été obtenu par copolymérisation d'autres monomères que le monomères $M_i$ et avoir été soumis ensuite à une étape de transformation chimique, de telle sorte que les unités structurales qu'il comprend sont identiques à celles qui auraient été obtenue par copolymérisation du monomère $M_i$. Par exemple, un monomère à fonctionnalité acide, tel que l'acide acrylique ou l'acide méthacrylique peut être tout d'abord copolymérisé avec d'autres monomères pour former un copolymère, puis tout ou partie des fonctions acides peuvent ensuite être transformées par toute réaction, par exemple au moyen d'une réaction d'estérification avec un alcanol ou d'amidation avec une alkylamine. On obtiendra alors un copolymère comprenant des unités répétitives correspondant à un monomère acrylate d'alkyle ou acrylamide d'alkyle.

Par « le copolymère / l'oligomère résulte directement ou indirectement », on entend que le procédé de préparation du copolymère / de l'oligomère peut comprendre une ou plusieurs étapes distinctes de la copolymérisation, telle qu'une étape de déprotection. Notamment, dans le cas des oligomères diol, la copolymérisation peut éventuellement être suivie d'une étape de déprotection des fonctions diol.

Dans toute la description, on utilise indifféremment et de façon équivalente les expressions : « l'oligomère résulte, directement ou indirectement, de la copolymérisation » et « l'oligomère résulte de la copolymérisation ».

➢ Composition d'additifs selon l'invention :

Un objet de la présente invention est une composition de composés associatifs et échangeables, cette composition résultant du mélange d'au moins :

- un oligomère polydiol A1 tel que décrit ci-après ou notamment susceptible d'être obtenu par l'un des procédés décrits ci-après ;
- un composé A2 comprenant au moins deux fonctions ester boronique tel que décrit ci-après.

Cette composition d'additifs permet de contrôler et de moduler le comportement rhéologique d'un milieu dans lequel elle est ajoutée. Le milieu peut être un milieu hydrophobe, notamment apolaire, tel qu'un solvant, une huile minérale, une huile naturelle, une huile synthétique.

◦ ***Oligomère polydiol A1***

L'oligomère polydiol A1 est une macromolécule hydrocarbonée comprenant au moins deux fonctions diol et éventuellement une ou plusieurs fonctions oxygénées, azotées, soufrées, comme par exemple des fonctions : acide carboxylique, ester, éther, amine, amide, thiol, thioéther, thioester.

L'oligomère polydiol A1 présente une masse molaire moyenne en nombre inférieure à 10 000 g/mol. Avantageusement, l'oligomère polydiol A1 présente une masse molaire moyenne en nombre inférieure à 9500g/mol.

De préférence l'oligomère polydiol A1 présente une masse molaire moyenne en nombre allant de 600 g/mol à inférieure à 10 000 g/mol, avantageusement de 600 à 9500 g/mol.

La masse molaire moyenne en nombre est obtenue par mesure de chromatographie d'exclusion stérique en utilisant une calibration poly(méthacrylate de méthyle). La méthode de mesure de chromatographie d'exclusion stérique en utilisant une calibration poly(méthacrylate de méthyle) est décrite dans l'ouvrage (Fontanille, M.; Gnanou, Y., Chimie

et physico-chimie des polymères. 2nd ed.; Dunod: 2010; p 546).

L'oligomère A1 comprend des unités répétitives correspondant à des monomères M1 de formule générale (I).

L'oligomère A1 peut comprendre des unités répétitives correspondant à des monomères M2 de formule générale (II).

L'oligomère A1 peut comprendre des unités répétitives correspondant à des monomères M3 de formule générale (X).

Avantageusement, l'oligomère A1 ne comprend pas d'unités répétitives à caractère aromatique. Par « l'oligomère A1 ne comprend pas d'unités répétitives à caractère aromatique », on entend que l'oligomère A1 comprend moins de 2 % molaire d'unités répétitives à caractère aromatique, en particulier, moins de 2 % molaire d'unités répétitives correspondant à du styrène. Avantageusement, cette définition correspond à un oligomère A1 qui comprend moins de 1,5 % molaire d'unités répétitives à caractère aromatique, en particulier, moins de 1,5 % molaire d'unités répétitives correspondant à du styrène.

Avantageusement, l'oligomère A1 comprend au moins des unités répétitives correspondant à des monomères M1 de formule générale (I) et des unités répétitives correspondant à des monomères M2 de formule générale (II), à caractère non aromatique. Avantageusement encore, l'oligomère polydiol A1 présente une masse molaire moyenne en nombre inférieure à 10 000 g/mol, avantageusement inférieure à 9 500g/mol. De préférence A1 présente une masse molaire moyenne en nombre allant de 600 g/mol à inférieure à 10 000 g/mol, avantageusement de 600 à 9500 g/mol.

Selon un mode de réalisation préféré de l'invention, l'oligomère polydiol A1 résulte, directement ou indirectement, de la copolymérisation d'au moins deux premiers monomères M1 portant une fonction diol, et d'au moins un second monomère M2, à caractère non aromatique, de structure chimique différente de celle du monomère M1.

Selon un mode de réalisation préféré l'oligomère polydiol A1 est essentiellement constitué d'unité répétitives correspondant à au moins deux monomères M1 portant une fonction diol, et un ou plusieurs monomères M2, de structure chimique différente de celle du monomère M1.

• *Monomère M1*

Le monomère M1 a pour formule générale (I) :

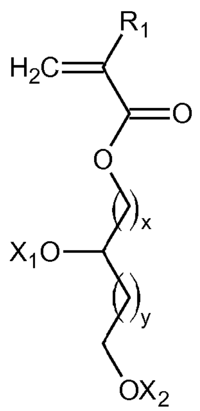

(I)

dans laquelle :

- $R_1$ est choisi parmi le groupe formé par -H, $-CH_3$ et $-CH_2-CH_3$, de préférence -H et $-CH_3$ ;
- x est un nombre entier allant de 1 à 18, de préférence allant de 2 à 18; de manière plus préférée de 3 à 8 ; de manière encore plus préférée x est égal à 4 ;
- y est un nombre entier égal à 0 ou 1; de préférence y est égal à 0 ;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;

ou bien

- $X_1$ et $X_2$ forment avec les atomes d'oxygène un pont de formule suivante : dans laquelle :

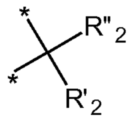

- les étoiles (*) symbolisent les liaisons aux atomes d'oxygène,
- R'$_2$ et R"$_2$, identiques ou différents, sont choisis parmi le groupe formé par l'hydrogène et un groupe alkyle en $C_1$-$C_{11}$ ;
  ou bien

- $X_1$ et $X_2$ forment avec les atomes d'oxygène un ester boronique de formule suivante :

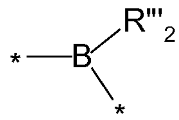

dans laquelle :

- les étoiles (*) symbolisent les liaisons aux atomes d'oxygène,
- R'''$_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$, de manière plus préférée le phényle.

De préférence, lorsque R'$_2$ et R"$_2$ sont un groupe alkyle en $C_1$-$C_{11}$ ; la chaîne hydrocarbonée est une chaîne linéaire. De préférence, le groupe alkyle en $C_1$-$C_{11}$ est choisi parmi le groupe formé par le méthyle, l'éthyle, le n-propyle, le n-butyle, le n-pentyle, le n-hexyle, le n-heptyle, le n-octyle, le n-nonyle, le n-décycle et le n-undécyle. De manière plus préférée, le groupe alkyle $C_1$-$C_{11}$ est le méthyle.

De préférence, lorsque R'''$_2$ est un groupe alkyle en $C_2$-$C_{30}$, la chaîne hydrocarbonée est une chaîne linéaire.

Parmi les monomères de formule (I), les monomères répondant à la formule (I-A) font partie des préférés :

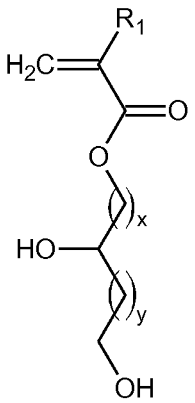

(I-A)

dans laquelle :

- $R_1$ est choisi parmi le groupe formé par -H, -$CH_3$ et -$CH_2$-$CH_3$, de préférence -H et -$CH_3$ ;
- x est un nombre entier allant de 1 à 18, de préférence allant de 2 à 18; de manière plus préférée de 3 à 8 ; de manière encore plus préférée x est égal à 4 ;
- y est un nombre entier égal à 0 ou 1; de préférence y est égal à 0.

Parmi les monomères de formule (1), les monomères répondant à la formule (1-B) font partie des préférés :

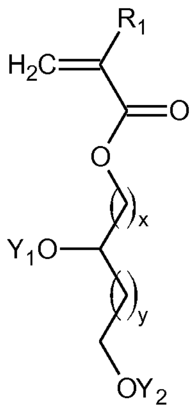

(I-B)

dans laquelle :

- $R_1$ est choisi parmi le groupe formé par -H, $-CH_3$ et $-CH_2-CH_3$, de préférence -H et $-CH_3$ ;
- x est un nombre entier allant de 1 à 18, de préférence allant de 2 à 18; de manière plus préférée de 3 à 8 ; de manière encore plus préférée x est égal à 4 ;
- y est un nombre entier égal à 0 ou 1; de préférence y est égal à 0 ;
- $Y_1$ et $Y_2$, identiques ou différents, sont choisis parmi le groupe formé par le tétrahydropyranyle, le méthyloxyméthyle, le ter-butyle, le benzyle, le triméthylsilyle et le t-butyle diméthylsilyle ;
  ou bien
- $Y_1$ et $Y_2$ forment avec les atomes d'oxygène un pont de formule suivante : dans laquelle :

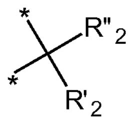

  - les étoiles (*) symbolisent les liaisons aux atomes d'oxygène,
  - $R'_2$ et $R''_2$, identiques ou différents, sont choisis parmi le groupe formé par l'hydrogène et un groupe alkyle en $C_1$-$C_{11}$ ;
    ou bien

- $Y_1$ et $Y_2$ forment avec les atomes d'oxygène un ester boronique de formule suivante : dans laquelle :

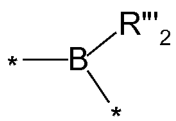

  - les étoiles (*) symbolisent les liaisons aux atomes d'oxygène,
  - $R'''_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$, de manière plus préférée le phényle.

De préférence, lorsque $R'_2$ et $R''_2$ est un groupe alkyle en $C_1$-$C_{11}$ ; la chaîne hydrocarbonée est une chaîne linéaire. De préférence, le groupe alkyle $C_1$-$C_{11}$ est choisi parmi le groupe formé par le méthyle, l'éthyle, le n-propyle, le n-butyle, le n-pentyle, le n-hexyle, le n-heptyle, le n-octyle, le n-nonyle, le n-décycle et le n-undécyle. De manière plus préférée, le groupe alkyle $C_1$-$C_{11}$ est le méthyle.

De préférence, lorsque $R'''_2$ est un groupe alkyle en $C_2$-$C_{30}$, la chaîne hydrocarbonée est une chaîne linéaire.

La synthèse de l'oligomère polydiol (A1) peut comprendre la copolymérisation de monomères (I-B) sous forme protégée avec d'autres comonomères, suivie de la déprotection des fonctions diol des monomères (I-B).

• <u>*Obtention du monomère M1*</u>

Le monomère M1 de formule générale (I) est obtenu suivant les méthodes décrites dans WO2015/110642,

WO2015/110643 et WO2016113229.

Des exemples de synthèse des monomères M1 sont illustrés dans la partie expérimentale des demandes WO2015/110642, WO2015/110643 et WO2016113229.

• *Monomère M2*

Le monomère M2 a pour formule générale (II) : dans laquelle :

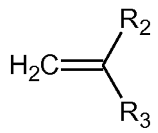

(II)

- $R_2$ est choisi parmi le groupe formé par -H, $-CH_3$ et $-CH_2-CH_3$, de préférence -H et$-CH_3$ ;
- $R_3$ est choisi parmi le groupe formé par : -C(O)-O-R'$_3$; -O-R'$_3$ ; -S-R'$_3$ ; et -C(O)-N(H)-R'$_3$, avec R'$_3$ un groupe alkyle en $C_1$-$C_{30}$.

Parmi les monomères de formule (II), les monomères répondant à la formule (II-A) font partie des préférés :

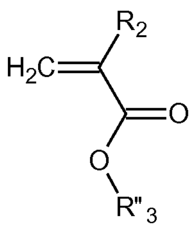

(II-A)

dans laquelle :

- $R_2$ est choisi parmi le groupe formé par -H, $-CH_3$ et$-CH_2-CH_3$, de préférence -H et $-CH_3$ ;
- R"$_3$ est un groupe alkyle en $C_1$-$C_8$.

Parmi les monomères de formule (II), les monomères répondant à la formule (II-B) font aussi partie des préférés :

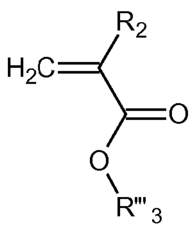

(II-B)

dans laquelle :

- $R_2$ est choisi parmi le groupe formé par -H, $-CH_3$ et$-CH_2-CH_3$, de préférence -H et $-CH_3$ ;
- R'''$_3$ est un groupe alkyle en $C_9$-$C_{30}$.

• *Obtention du monomère M2*

Les monomères de formule (II), (II-A) et, (II-B) sont bien connus de l'homme du métier. Ils sont commercialisés par Sigma-Aldrich® et TCI®.

• *Monomère M3*

Le monomère M3 a pour formule générale (X) :

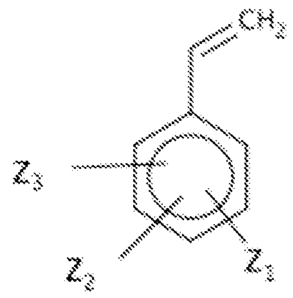

(X)

dans laquelle :

- $Z_1$, $Z_2$, $Z_3$, identiques ou différents, représentent des groupements choisis parmi un atome d'hydrogène, un alkyle en $C_1$-$C_{12}$, un groupement -OZ', -C(O)-O-Z' avec Z' un alkyle en $C_1$-$C_{12}$.

Par « groupe alkyle en $C_1$-$C_{12}$ », on entend une chaîne hydrocarbonée saturée, linéaire ou ramifiée comprenant de 1 à 12 atomes de carbone. De préférence, la chaîne hydrocarbonée est linéaire. De manière préférée, la chaîne hydrocarbonée comprend de 1 à 6 atomes de carbone.

Avantageusement, $Z_1$, $Z_2$, $Z_3$, identiques ou différents, représentent des groupements choisis parmi un atome d'hydrogène, un alkyle en $C_1$-$C_6$, un groupement -OZ', -C(O)-O-Z' avec Z' un alkyle en $C_1$-$C_6$.

De manière encore préférée, $Z_1$, $Z_2$, $Z_2$, identiques ou différents, représentent des groupements choisis parmi un atome d'hydrogène, un alkyle en $C_1$-$C_4$, un groupement -OZ', -C(O)-O-Z' avec Z' un alkyle en $C_1$-$C_4$.

Parmi les monomères M3 préférés, on peut citer : le styrène, le para tert-butyl styrène, le para méthoxy styrène, le para acétoxy styrène, le 2,4,6 triméthylstyrène,

Selon un mode de réalisation préféré M3 est le styrène.

• *Obtention du monomère M3*

Certains monomères de formule (X), tels que le styrène, le para tert-butyl styrène, le para méthoxy styrène, le para acétoxy styrène, le 2,4,6 triméthylstyrène sont bien connus de l'homme du métier. Ils sont commercialisés notamment par Sigma-Aldrich®. D'autres monomères peuvent être préparés à partir de ces monomères commerciaux par des méthodes de synthèse bien connues de l'homme du métier.

• *Autres monomères*

En plus des unités répétitives détaillées ci-dessus correspondant aux monomères M1, M2 et M3, les oligomères A1 de l'invention peuvent comprendre d'autres unités répétitives dérivées d'autres comonomères, leur proportion étant d'au plus 20% en poids, de préférence d'au plus 10% en poids et plus préférablement d'au plus 5% poids, basé sur le poids total des unités répétitives dont est composé le copolymère A1.

• *Procédé d'obtention des oligomères polydiol A1*

L'homme du métier est à même de synthétiser les oligomères polydiol A1 en faisant appel à ses connaissances générales.

La copolymérisation peut être amorcée en masse ou en solution dans un solvant organique par des composés générateurs de radicaux libres. Par exemple, les oligomères de l'invention sont obtenus par les procédés connus de copolymérisation radicalaire, notamment contrôlée telle que la méthode dénommée polymérisation radicalaire contrôlée par transfert de chaîne réversible par addition-fragmentation (en anglais : Réversible Addition-Fragmentation Chain Transfer (RAFT)) et la méthode dénommée polymérisation radicalaire contrôlée par transfert d'atome (en anglais Atom Transfer Radical Polymerization (ARTP)). La polymérisation radicalaire conventionnelle et la télomérisation peuvent également être employées pour préparer les copolymères de l'invention (Moad, G.; Solomon, D. H., The Chemistry of

Radical Polymerization. 2nd ed.; Elsevier Ltd: 2006; p 639 ; Matyaszewski, K.; Davis, T. P. Handbook of Radical Polymerization; Wiley-Interscience: Hoboken, 2002; p 936).

Pour permettre le contrôle de la longueur de chaîne oligomérique, on peut utiliser des méthodes connues de l'homme du métier, comme par exemple : l'utilisation d'agents de transfert de chaîne, en particulier des mercaptans ; le contrôle des proportions de monomères en fonction de leur réactivité ; la cinétique d'introduction des monomères ; la température de la réaction. De telles méthodes sont décrites notamment dans les documents US-5,942,642, US-5,691,284, US-4,009,195.

L'oligomère polydiol A1 est avantageusement préparé selon un procédé de préparation qui comprend au moins une étape de polymérisation (a) dans laquelle on met en contact au moins :

i) deux premiers monomères M1 de formule générale (I) telle que décrite précédemment ;
ii) éventuellement, au moins un second monomère M2 de formule générale (II) telle que décrite précédemment ;
iii) éventuellement, au moins un troisième monomère M3 de formule générale (X) telle que décrite précédemment ;
iv) au moins une source de radicaux libres.

Dans un mode de réalisation, le procédé peut comprendre en outre v) au moins un agent de transfert de chaîne.

Par « une source de radicaux libres » on entend un composé chimique permettant de générer une espèce chimique possédant un ou plusieurs électrons non appariés sur sa couche externe. L'homme du métier peut utiliser toute source de radicaux libres connue en soi et adaptée aux procédés de polymérisation, notamment de polymérisation radicalaire contrôlée. Parmi les sources de radicaux libres, on préfère, à titre illustratif, le peroxyde de benzoyle, le peroxyde de tertio-butyle, les composés diazoïques tels que l'azobisisobutyronitrile, les composés péroxygénés tels que les persulfates ou l'eau oxygénée, les systèmes redox tels que l'oxydation de $Fe^{2+}$, les mélanges persulfates/sodium-métabisulfite, ou l'acide ascorbique/eau oxygénée ou encore les composés clivables photochimiquement ou par radiations ionisantes, par exemple les rayons ultra-violet ou par rayonnement beta ou gamma.

Par « agent de transfert de chaîne », on entend un composé dont le but est d'assurer une croissance homogène des chaînes macromoléculaires par réactions de transfert réversible entre espèces en croissance, i.e. chaînes polymères terminées par un radical carboné, et espèces dormantes, i.e. chaînes polymères terminées par un agent de transfert. Ce processus de transfert réversible permet de contrôler les masses moléculaires des copolymères ainsi préparés. De préférence dans le procédé de l'invention, l'agent de transfert de chaîne comprend un groupe thiocarbonylthio -S-C(=S)- . A titre illustratif d'agent de transfert de chaîne, on peut citer les dithioesters, les trithiocarbonates, les xanthates et les dithiocarbamates. Un agent de transfert préféré est le dithiobenzoate de cumyle ou le 2-cyano-2-propyl benzodithioate.

Par « agent de transfert de chaîne », on entend également un composé dont le but est de limiter la croissance des chaînes macromoléculaires en cours de formation par addition de molécules monomères et d'amorcer de nouvelles chaînes, ce qui permet de limiter les masses moléculaires finales, voire de les contrôler. Un tel type d'agent de transfert est utilisé en télomérisation. Un agent de transfert préféré est la cystéamine.

Dans un mode de réalisation, le procédé de préparation d'un oligomère polydiol comprend :

- au moins une étape de polymérisation (a) telle que définie ci-dessus, dans laquelle les monomères M1 et M2 sont choisis avec $X_1$ et $X_2$ représentent l'hydrogène.

Selon un mode de réalisation (lorsque l'on a procédé à une polymérisation radicalaire avec agent de transfert de chaîne RAFT), après la synthèse directe de l'oligomère contenant les fonctions diol, le procédé comprend une étape d'élimination du bout de chaîne RAFT par aminolyse puis addition de Michael.

Les préférences et définitions décrites pour les formules générales (I), (I-A), (I-B), (II-A), (II-B) et (X) s'appliquent également aux procédés décrits ci-dessus.

• *Propriétés des oligomères polydiols A1*

Les oligomères polydiols A1 sont linéaires. Les oligomères A1 présentent un squelette de fonctions polymérisables, notamment un squelette de fonctions méthacrylate et éventuellement de fonctions styrène ou dérivées du styrène, et un mélange de chaînes latérales hydrocarbonées substituées ou non par des fonctions diol.

Les oligomères polydiol A1 présentent l'avantage d'être sensibles à des stimuli extérieurs, tels que la température, la pression, la vitesse de cisaillement ; cette sensibilité se traduisant par un changement de propriétés. En réponse à un stimulus, la conformation dans l'espace des chaînes d'oligomères est modifiée.

Avantageusement, les chaînes latérales de l'oligomère polydiol A1 ont une longueur moyenne allant de 8 à 20 atomes de carbone, de préférence de 9 à 18 atomes de carbone. Par « longueur moyenne de chaîne latérale » on entend la longueur moyenne des chaînes latérales des monomères M1 de formule (I) et M2 de formule (II) entrant dans la constitution du copolymère. Les chaînes latérales issues du ou des éventuels monomères styréniques ne sont pas

prises en compte dans le calcul des longueurs moyennes des chaînes latérales. L'homme du métier sait obtenir cette longueur moyenne en sélectionnant de manière appropriée les types et le ratio de monomères constituant l'oligomère polydiol. Le choix de cette longueur moyenne de chaîne permet d'obtenir un oligomère soluble dans un milieu hydrophobe, quelle que soit la température à laquelle l'oligomère est dissous. L'oligomère polydiol A1 est donc miscible dans un milieu hydrophobe. Par « milieu hydrophobe » on entend un milieu qui n'a pas d'affinité ou qui a une très faible affinité pour l'eau, c'est à dire qu'il n'est pas miscible dans l'eau ou dans un milieu aqueux.

Avantageusement, l'oligomère polydiol A1 a un pourcentage molaire d'unités répétitives correspondant au monomère M1 de formule (I) dans ledit copolymère allant de 2 à 70 %, de préférence de 4 à 50%.

Le pourcentage molaire d'unités répétitives dans l'oligomère résulte directement de l'ajustement des quantités de monomères mises en oeuvre pour la synthèse de l'oligomère.

Avantageusement, l'oligomère polydiol A1 a un degré de polymérisation moyen en nombre allant de 3 à 100, de préférence de 3 à 50. De façon connue, le degré de polymérisation est contrôlé en utilisant une technique de polymérisation radicalaire contrôlée, une technique de télomérisation ou en ajustant la quantité de source de radicaux libres lorsque les copolymères de l'invention sont préparés par polymérisation radicalaire conventionnelle.

Avantageusement, l'oligomère polydiol A1 a un indice de polydispersité (Ip) allant de 1,05 à 4,0 ; de préférence allant de 1,10 à 3,8. L'indice de polydispersité est obtenu par mesure de chromatographie d'exclusion stérique en utilisant une calibration poly(méthacrylate de méthyle).

◦ *Composé A2*

• *Composé A2 diester boronique*

Dans un mode de réalisation, le composé A2 comprenant deux fonctions esters boroniques a pour formule générale (III) :

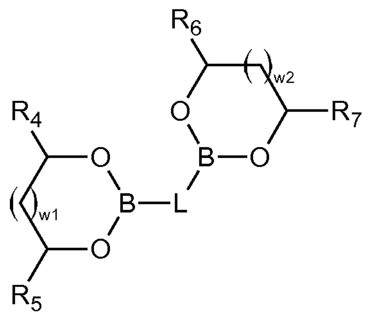

(III)

dans laquelle :

- $w_1$ et $w_2$, identiques ou différents sont des nombres entiers égaux à 0 ou 1,
- $R_4$, $R_5$, $R_6$ et $R_7$, identiques ou différents, sont choisis parmi le groupe formé par l'hydrogène et un groupement hydrocarboné comprenant de 1 à 30 atomes de carbone, de préférence entre 4 et 18 atomes de carbone, encore plus préférentiellement entre 6 et 14 atomes de carbone, ledit groupement hydrocarboné étant éventuellement substitué par un ou plusieurs groupements choisis parmi : un hydroxyle, un groupement -OJ, -C(O)-O-J avec J un groupement hydrocarboné comprenant de 1 à 24 atomes de carbone ; de préférence, J comprend de 4 à 18 atomes de carbone, de préférence entre 6 et 12 atomes de carbone ;
- L est un groupement de liaison divalent et choisi parmi le groupe formé par un aryle en $C_6$-$C_{18}$, un aralkyle en $C_7$-$C_{24}$ et une chaîne hydrocarbonée en $C_2$-$C_{24}$. De préférence, la chaîne hydrocarbonée est un groupe alkyle linéaire. De préférence la chaîne hydrocarbonée comprend de 6 à 16 atomes de carbone. De préférence L est un aryle en $C_6$-$C_{18}$.

Dans un mode de réalisation de l'invention, le composé A2 est un composé de formule générale (III) ci-dessus dans laquelle :

- $w_1$ et $w_2$, identiques ou différents sont des nombres entiers égaux à 0 ou 1;
- $R_4$ et $R_6$ sont identiques et sont des atomes d'hydrogène ;
- $R_5$ et $R_7$ sont identiques et sont un groupe hydrocarboné, de préférence un alkyle linéaire, ayant de 1 à 24 atomes de carbone, de préférence de 4 à 18 atomes de carbone, de préférence de 6 à 16 atomes de carbone ;

- L est un groupement de liaison divalent et est un aryle en $C_6$-$C_{18}$; de préférence le phényle.

Le composé A2 diester boronique de formule (III) telle que décrite ci-dessus est obtenu suivant le procédé décrit dans WO2015/110642 ou dans WO2015/110643.

• *Composé A2 oligomère poly(ester boronique)*

Dans un autre mode de réalisation, le composé A2 comprenant au moins deux fonctions esters boroniques est un oligomère poly(ester boronique) résultant de la copolymérisation d'au moins deux monomères M4 de formule (IV) telle que décrite ci-dessous avec

- au moins un monomère M5 de formule (V) telle que décrite ci-dessous et/ou
- au moins un monomère M3 de formule (X) tel que défini ci-dessus.

Dans la suite de la demande, les expressions « copolymère ou oligomère ester boronique » ou « copolymère ou oligomère poly(ester boronique) » sont équivalentes et désigne le même copolymère.

Avantageusement, le copolymère poly(ester boronique) a une masse molaire moyenne en nombre allant de 600 g/mol à 10 000 g/mol.

De préférence l'oligomère ester boronique A2 présente une masse molaire moyenne en nombre allant de 600 g/mol à inférieure à 10 000 g/mol, avantageusement de 600 g/mol à 9500 g/mol, et plus avantageusement de 600 g/mol à 5000 g/mol.

La masse molaire moyenne en nombre est obtenue par mesure de chromatographie d'exclusion stérique en utilisant une calibration poly(méthacrylate de méthyle). La méthode de mesure de chromatographie d'exclusion stérique en utilisant une calibration poly(méthacrylate de méthyle) est décrite dans l'ouvrage (Fontanille, M.; Gnanou, Y., Chimie et physico-chimie des polymères. 2nd ed.; Dunod: 2010; p 546).

✔ Monomère M4 de formule (IV)

Le monomère M4 du composé A2 oligomère ester boronique a pour formule générale (IV) dans laquelle :

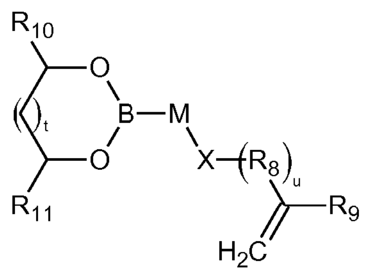

(IV)

dans laquelle :

- t est un nombre entier égal à 0 ou 1 ;
- u est un nombre entier égal à 0 ou 1 ;
- M et $R_8$ sont des groupements de liaison divalent, identiques ou différents, et sont choisis parmi le groupe formé par un aryle en $C_6$-$C_{18}$; un aralkyle en $C_7$-$C_{24}$ et alkyle en $C_2$-$C_{24}$, de préférence un aryle en $C_6$-$C_{18}$;
- X est une fonction choisie parmi le groupe formé par -O-C(O)-, -C(O)-O-, -C(O)-N(H)-, -N(H)-C(O)-, -S- , -N(H)- , -N(R'$_4$)- et -O- avec $R'_4$ une chaîne hydrocarbonée comprenant de 1 à 15 atomes de carbone ; de préférence, la chaîne hydrocarbonée $R'_4$ est un groupe alkyle linéaire ; de préférence, $R'_4$ comprend de 1 à 8 atomes de carbone ;
- $R_9$ est choisi parmi le groupe formé par -H, $-CH_3$ et$-CH_2-CH_3$ ; de préférence -H et $-CH_3$;
- $R_{10}$ et $R_{11}$, identiques ou différents, sont choisis parmi le groupe formé par l'hydrogène et un groupement hydrocarboné comprenant de 1 à 30 atomes de carbone, de préférence entre 4 et 18 atomes de carbone, encore plus préférentiellement entre 6 et 14 atomes de carbone, ledit groupement hydrocarboné étant éventuellement substitué par un ou plusieurs groupements choisis parmi : un hydroxyle, un groupement -OJ, - C(O)-O-J avec J un groupement hydrocarboné comprenant de 1 à 24 atomes de carbone ; de préférence la chaîne hydrocarbonée J comprend de 4 à 18 atomes de carbone, de préférence entre 6 et 12 atomes de carbone.

Dans un mode de réalisation, le monomère M4 a pour formule générale (IV) dans laquelle :

- t est un nombre entier égal à 0 ou 1 ;
- u est un nombre entier égal à 0 ou 1 ;
- M et $R_8$ sont des groupements de liaison divalents et sont différents, M est un aryle en $C_6$-$C_{18}$, de préférence le phényle, $R_8$ est un aralkyle en $C_7$-$C_{24}$, de préférence le benzyle ;
- X est une fonction choisie parmi le groupe formé par -O-C(O)-, -C(O)-O-, -C(O)-N(H)- et -O-, de préférence -C(O)-O- ou -O-C(O)- ;
- $R_9$ est choisi parmi le groupe formé par -H, $-CH_3$, de préférence -H;
- $R_{10}$ et $R_{11}$ sont différents, l'un des groupes $R_{10}$ ou $R_{11}$ est H et l'autre groupe $R_{10}$ ou $R_{11}$ est une chaîne hydrocarbonée, de préférence un groupe alkyle linéaire, ayant de 1 à 24 atomes de carbone, de préférence entre 4 et 18 atomes de carbone, de préférence entre 6 et 12 atomes de carbone.

Dans un mode de réalisation, le monomère M4 est un monomère styrénique. C'est le cas lorsque, dans la formule (IV) : u = 1, R9 est H et R8 représente un aryle en $C_6$-$C_{18}$ ou un aralkyle en $C_7$-$C_{24}$ et la double liaison du monomère M4 de formule (IV) est directement connectée au groupement aryle.

✓ Synthèse du monomère M4 de formule (IV)

Le monomère M4 de formule (IV) telle que décrite ci-dessus est obtenu suivant le procédé décrit dans WO2015/110642 ou dans WO2015/110643.

✓ Monomère M5 de formule générale (V) :

Le monomère M5 du composé A2 copolymère ester boronique a pour formule générale (V)

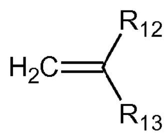

(V)

dans laquelle :

- $R_{12}$ est choisi parmi le groupe formé par -H, $-CH_3$ et-$CH_2$-$CH_3$, de préférence -H et $-CH_3$ ;
- $R_{13}$ est choisi parmi le groupe formé par -C(O)-O-$R'_{13;}$ -O-$R'_{13}$, -S-$R'_{13}$ et -C(O)-N(H)-$R'_{13}$ avec $R'_{13}$ un groupe alkyle en $C_1$-$C_{25}$.

De préférence, $R'_{13}$ est linéaire.

Parmi les monomères de formule (V), les monomères répondant à la formule (V-A) font partie des préférés :

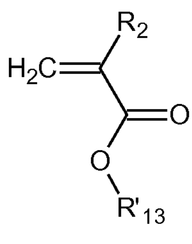

(V-A)

dans laquelle :

- $R_2$ est choisi parmi le groupe formé par -H, $-CH_3$ et-$CH_2$-$CH_3$, de préférence - H et $-CH_3$ ;
- $R'_{13}$ un groupe alkyle en $C_1$-$C_{25}$, de préférence un alkyle linéaire en $C_1$-$C_{25}$, de manière encore plus préféré un alkyle linéaire en $C_5$-$C_{15}$.

✓ Obtention du monomère M5 :

Les monomères de formules (V) et (V-A) sont bien connus de l'homme du métier. Ils sont commercialisés par Sigma-Aldrich® et TCI®.

✓ Synthèse du composé A2 oligomère poly(ester boronique)

L'homme du métier est à même de synthétiser les copolymères ou les oligomères ester boronique en faisant appel à ses connaissances générales. La copolymérisation peut être amorcée en masse ou en solution dans un solvant organique par des composés générateurs de radicaux libres. Par exemple, les copolymères ou les oligomères ester boronique sont obtenus par les procédés connus de copolymérisation radicalaire, notamment contrôlée telle que la méthode dénommée polymérisation radicalaire contrôlée par transfert de chaîne réversible par addition-fragmentation (en anglais : Réversible Addition-Fragmentation Chain Transfer (RAFT)) et la méthode dénommée polymérisation radicalaire contrôlée par transfert d'atome (en anglais Atom Transfer Radical Polymerization (ARTP)). La polymérisation radicalaire conventionnelle et la télomérisation peuvent également être employées pour préparer les copolymères ou les oligomères de l'invention (Moad, G.; Solomon, D. H., The Chemistry of Radical Polymerization. 2nd ed.; Elsevier Ltd: 2006; p 639 ; Matyaszewski, K.; Davis, T. P. Handbook of Radical Polymerization; Wiley-Interscience: Hoboken, 2002; p 936)).

Le copolymère ou l'oligomère ester boronique est préparé selon un procédé qui comprend au moins une étape de polymérisation (a) dans laquelle on met en contact au moins :

i) deux premiers monomères M4 de formule générale (IV) telle que définie précédemment ;
ii) éventuellement au moins un monomère M5 de formule générale (V) telle que définie précédemment ;
iii) éventuellement au moins un monomère M3 de formule générale (X) telle que définie précédemment ;
iv) au moins une source de radicaux libres.

Dans un mode de réalisation, le procédé peut comprendre en outre v) au moins un agent de transfert de chaîne.

Les préférences et définitions décrites pour les formules générales (IV) (V) et (X) s'appliquent également au procédé.

Les sources de radicaux et les agents de transferts sont ceux qui ont été décrits pour la synthèse des oligomères polydiols. Les préférences décrites pour les sources de radicaux et les agents de transferts s'appliquent également à ce procédé.

✓ Propriétés des composés A2 oligomères poly(ester boronique)

Avantageusement, la chaîne formée par l'enchaînement des groupes $R_{10}$, M, $(R_8)_u$ avec u, un nombre entier égal à 0 ou 1, et X du monomère M4 de formule générale (IV) présente un nombre total d'atomes de carbone allant de 8 à 38, de préférence allant de 10 à 26.

Avantageusement, les chaînes latérales du copolymère ou de l'oligomère ester boronique ont une longueur moyenne supérieure à 8 atomes de carbone, de préférence allant de 11 à 16. Cette longueur de chaînes permet de solubiliser le copolymère ou l'oligomère ester boronique dans un milieu hydrophobe. Par « longueur moyenne de chaîne latérale » on entend la longueur moyenne des chaînes latérales de chaque monomère constituant le copolymère ou l'oligomère. Les chaînes latérales issues du ou des monomères styréniques ne sont pas prises en compte dans le calcul des longueurs moyennes des chaînes latérales. L'homme du métier sait obtenir cette longueur moyenne en sélectionnant de manière appropriée les types et le ratio de monomères constituant le copolymère ou l'oligomère ester boronique.

Avantageusement, l'oligomère ester boronique A2 a un pourcentage molaire de monomère M4 de formule (IV) dans ledit copolymère ou oligomère allant de 4 à 50%, de préférence de 4 à 30%.

Avantageusement, l'oligomère ester boronique A2 a un pourcentage molaire de monomère M4 de formule (IV) dans ledit copolymère ou oligomère allant de 4 à 50%, de préférence de 4 à 30% et un pourcentage molaire de monomère M5 de formule (V) dans ledit copolymère ou oligomère allant de 50 à 96%, de préférence de 70 à 96%.

Avantageusement, l'oligomère ester boronique A2 a un pourcentage molaire de monomère M3, de formule (X), dans ledit oligomère allant de 2 à 50% molaire, préférentiellement de 3 à 40%, de manière plus préférée de 5 à 35% molaire.

Avantageusement, l'oligomère ester boronique a un degré de polymérisation moyen en nombre allant de 2 à 100, de préférence de 2 à 50.

Avantageusement, l'oligomère ester boronique a un indice de polydispersité (Ip) allant de 1,04 à 3,54 ; de préférence allant de 1,10 à 3,10. Ces valeurs sont obtenues par chromatographie d'exclusion stérique en utilisant le tétrahydrofurane comme éluant et une calibration poly(méthacrylate de méthyle).

Le composé A2, notamment le l'oligomère ester boronique, présente la propriété de pouvoir réagir dans un milieu hydrophobe, notamment apolaire, avec un composé porteur de fonction(s) diol par une réaction de transestérification. Cette réaction de transestérification peut être représentée selon le schéma 1 suivant :

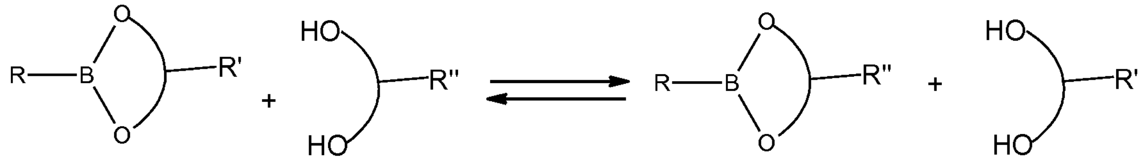

Schéma 1

Ainsi, lors d'une réaction de transestérification, il se forme un ester boronique de structure chimique différente de l'ester boronique de départ par échange des groupes hydrocarbonés symbolisé par

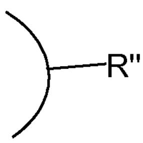 et 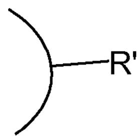

◦ *Composé exogène A4*

Selon un mode de réalisation, la composition d'additifs résulte du mélange d'au moins :

- un oligomère polydiol A1,
- un composé A2 comprenant au moins deux fonctions ester boronique, qui peut être un oligomère, A2 comprenant au moins deux fonctions esters boroniques et pouvant s'associer avec ledit oligomère polydiol A1 par au moins une réaction de transestérification,
- un composé exogène A4 polyol.

Avantageusement, selon ce mode de réalisation de l'invention, le pourcentage molaire de composé exogène A4, dans la composition d'additifs, par rapport aux fonctions ester boronique du composé A2 va de 0,025 à 5000%, de préférence de 0,1% à 1000%, de manière encore plus préférée de 0,5% à 500%, de manière encore plus préférée de 1% à 150%.

Le composé exogène A4 est choisi parmi les polyols, notamment les 1,2-diols et les 1,3-diols ainsi que les dérivés du glycérol. Par « composé exogène » on entend au sens de la présente invention un composé qui est rajouté à la composition d'additifs résultant du mélange d'au moins un oligomère A1 polydiol et d'au moins un composé A2, notamment l'oligomère poly(ester boronique).

Le composé A4 est choisi parmi les composés organiques comprenant au moins un groupement diol et qui sont compatibles avec une utilisation dans une composition lubrifiante. De préférence, le composé A4 est choisi parmi les composés hydrocarbonés comprenant de 2 à 30 atomes de carbone.

De préférence, ce composé exogène A4 est choisi parmi les additifs lubrifiants comme par exemple les composés connus pour leur fonction de modificateur de frottement, d'épaississant, de dispersant ou de détergent dans les compositions lubrifiantes.

Notamment composé exogène A4 peut être choisi parmi les 1,2-diols et les 1,3-diols ainsi que les dérivés du glycérol.

Selon un mode de réalisation préféré, le composé exogène A4 peut avoir pour formule générale (VI) :

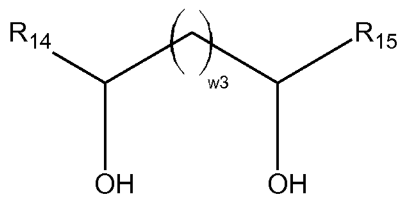

(VI)

dans laquelle :

w3 est un nombre entier égal à 0 ou 1,
$R_{14}$ et $R_{15}$, identiques ou différents, sont choisis parmi le groupe formé par l'hydrogène et une chaîne hydrocarbonée ayant de 1 à 24 atomes de carbone, de préférence entre 4 et 18 atomes de carbone, de préférence entre 6 et 12 atomes de carbone ; de préférence, la chaîne hydrocarbonée est un groupe alkyle linéaire. De préférence, elle comprend de 4 à 18 atomes de carbone, de préférence entre 6 et 12 atomes de carbone.

Dans un mode de réalisation, le composé exogène A4 a pour formule générale (VI) dans laquelle :

- $w_3$ est un nombre entier égal à 0 ou 1 ;
- $R_{14}$ et $R_{15}$, identiques ou différents, sont choisis parmi les groupes formé par - T, $-CH_2$-O-T, $-CH_2$-O-C(O)-T, T étant choisi parmi le groupe formé par l'hydrogène et une chaîne hydrocarbonée, de préférence une chaîne alkyle linéaire, ayant de 1 à 24 atomes de carbone, de préférence entre 4 et 18 atomes de carbone, de préférence entre 6 et 12 atomes de carbone.

Dans un mode de réalisation, le composé exogène A4 a pour formule générale (VI) dans laquelle :

- $w_3$ est un nombre entier égal à 0 ou 1 ;
- $R_{14}$ et $R_{15}$ sont différents, l'un des groupes $R_{14}$ ou $R_{15}$ est H et l'autre groupe $R_{14}$ ou $R_{15}$ est une chaîne hydrocarbonée, de préférence un groupe alkyle linéaire, ayant de 1 à 24 atomes de carbone, de préférence entre 4 et 18 atomes de carbone, de préférence entre 6 et 12 atomes de carbone.

Dans un autre mode de réalisation préféré, le composé exogène est choisi parmi les sucres et les dérivés de sucre.
L'homme du métier est capable, en faisant appel à ses connaissances générales, de choisir parmi les sucres et les dérivés de sucres, lesquels sont compatibles avec une huile lubrifiante.
Les composés de formule (VI) sont disponibles commercialement auprès des fournisseurs suivants : Sigma-Aldrich®, Alfa Aesar® et TCI®.

◦ *Composé exogène A5*

Selon un mode de réalisation, la composition d'additifs résulte du mélange d'au moins :

- un oligomère polydiol A1,
- un composé A2 comprenant au moins deux fonctions ester boronique, notamment un copolymère, avantageusement un oligomère, A2 comprenant au moins deux fonctions esters boroniques et pouvant s'associer avec ledit oligomère polydiol A1 par au moins une réaction de transestérification,
- un composé exogène A5 choisi parmi ceux répondant à la formule (XI) :

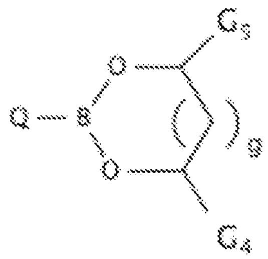

(XI)

dans laquelle :

- Q représente un groupement choisi parmi un groupement hydrocarboné comprenant de 1 à 30 atomes de carbone, éventuellement substituée par un ou plusieurs groupements choisis parmi : un hydroxyle, un groupement -OJ, -C(O)-O-J avec J un groupement hydrocarboné comprenant de 1 à 24 atomes de carbone,
- $G_4$, $G_5$, identiques ou différents, représentent des groupements choisis parmi un atome d'hydrogène, une chaîne hydrocarbonée comprenant de 1 à 24 atomes de carbone, un hydroxyle, un groupement -OJ, -C(O)-O-J avec J un groupement hydrocarboné comprenant de 1 à 24 atomes de carbone,
- g représente 0 ou 1.

Avantageusement le composé exogène A5 répond à la formule (XIIA) :

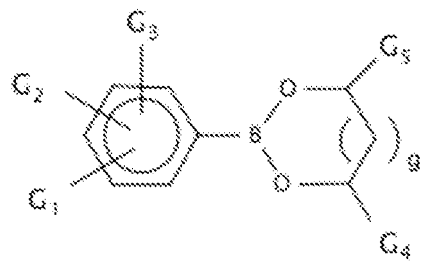

(XIIA)

dans laquelle :

- $G_1$, $G_2$, $G_3$, $G_4$, $G_5$, identiques ou différents, représentent des groupements choisis parmi un atome d'hydrogène, une chaîne hydrocarbonée comprenant de 1 à 24 atomes de carbone, un hydroxyle, un groupement -OJ, -C(O)-O-J avec J un groupement hydrocarboné comprenant de 1 à 24 atomes de carbone,
- g représente 0 ou 1.

Selon un mode de réalisation préféré, le pourcentage molaire de composé exogène A5 par rapport aux fonctions diol de l'oligomère A1 va de 0,025 à 5000%, de préférence va de 0,1% à 1000%, de manière encore plus préférée de 0,5% à 500%, de manière encore plus préférée de 1% à 150%.

Selon un mode de réalisation préféré, le composé exogène A5 est choisi parmi ceux répondant à la formule (XII B) :

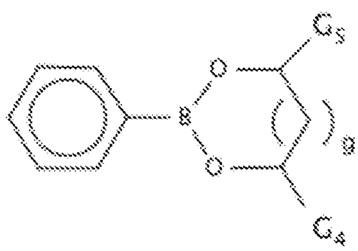

(XII B)

Selon un mode de réalisation encore préféré, le composé exogène A5 est choisi parmi ceux répondant à la formule (XII B) avec g = 0, $G_4$ = H et $G_5$ représente un alkyle en $C_1$-$C_{24}$.

Par réaction de transestérification, le composé exogène A5 libère in situ le fragment diol A6 de formule (XIII) :

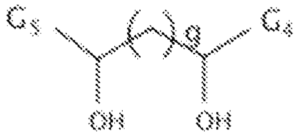

(XIII)

✓ Caractéristiques des nouvelles compositions d'additifs de l'invention

Les compositions d'additifs de l'invention résultant du mélange d'au moins un oligomère polydiol A1 tel que défini ci-dessus, d'au moins un composé A2 tel que défini précédemment, et éventuellement d'au moins un composé exogène A4 ou A5 tel que défini ci-dessus présentent des propriétés rhéologiques très variées en fonction de la température et selon la proportion des composés A1, A2 et éventuellement A4 et A5 utilisés.

Les oligomères polydiols A1 et les composés A2 tels que définis ci-dessus, présentent l'avantage d'être associatifs et d'échanger des liens chimiques, notamment dans un milieu hydrophobe, notamment un milieu hydrophobe apolaire.

Dans certaines conditions, les oligomères polydiols A1 et les composés A2 tels que définis ci-dessus peuvent être réticulés.

Les oligomères polydiols A1 et les composés A2 présentent aussi l'avantage d'être échangeables.

Par « associatif », on entend qu'il s'établit des liens chimiques covalents de type ester boronique entre les oligomères polydiols A1 et les composés A2 comprenant au moins deux fonctions esters boroniques. Suivant la fonctionnalité des polydiols A1 et des composés A2 et suivant la composition des mélanges, la formation des liens covalents entre les polydiols A1 et les composés A2 pourra amener ou non à la formation d'un réseau polymérique tridimensionnel.

Par « lien chimique », on entend un lien chimique covalent de type ester boronique.

Par « échangeable », on entend que les composés sont capables d'échanger des liens chimiques entre eux sans que le nombre total et la nature des fonctions chimiques soient modifiés. La réaction chimique d'échange (transestérification) est illustrée dans le schéma réactionnel 2 suivant :

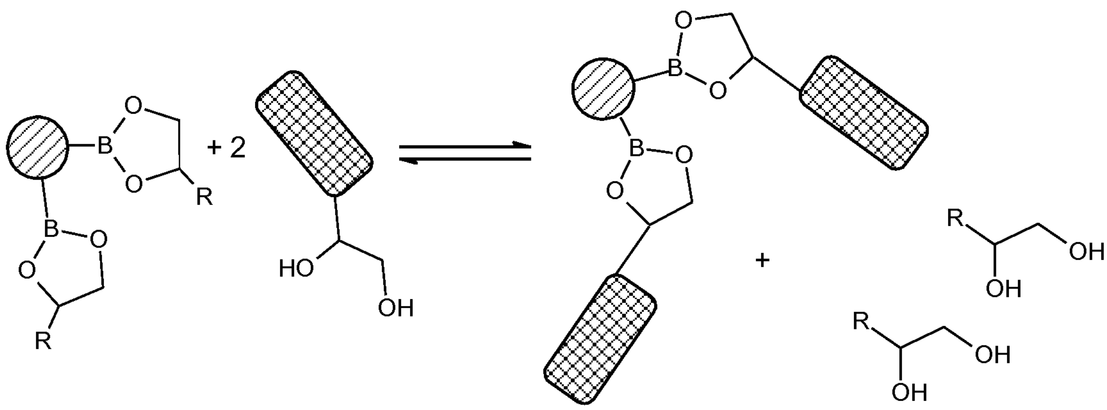

Schéma 2

avec :

- R un groupe chimique du composé A2,
- le rond hachuré symbolise le reste de la structure chimique du composé A2,
- le rectangle quadrillé symbolise le reste de la structure chimique de l'oligomère polydiol A1.

Les liens ester boronique des composés A2, éventuellement les liens ester boronique formés par réaction de transestérification entre les esters boroniques des composés A2 et les composés exogènes A4, ainsi que les liens esters

boroniques formés par association des oligomères polydiols A1 et des composés A2 peuvent s'échanger avec les fonctions diols portées par les composés A3 libérés in situ et éventuellement avec des fonctions diols portées par les composés exogènes A4 et/ou A5 pour former de nouveaux esters boroniques et de nouvelles fonctions diols sans que le nombre total de fonctions esters boroniques et de fonctions diols ne soit affecté. Cet autre processus d'échange de liens chimiques s'effectue par réaction de métathèse, via des échanges successifs des fonctions ester boronique en présence de diols. Un autre processus d'échange de liens chimiques est illustré en figure 2, dans laquelle on peut observer que l'oligomère polydiol A1-1, qui était associé à l'oligomère A2-1, a échangé deux liens esters boroniques avec le l'oligomère ester boronique A2-2. L'oligomère polydiol A1-2, qui était en associé à l'oligomère A2-2, a échangé deux liens esters boroniques avec l'oligomère ester boronique A2-1 ; le nombre total de lien ester boronique dans la composition étant inchangé et est égal à 4. L'oligomère A1-1 est alors associé avec l'oligomère A2-2. L'oligomèreA1-2 est alors avec l'oligomère A2-1. L'oligomère A2-1 a été échangé avec le polymère A2-2.

Par « réticulé », on entend un copolymère ou un oligomère sous forme d'un réseau obtenu par l'établissement de ponts entre les chaînes macromoléculaires du copolymère ou de l'oligomère. Ces chaînes reliées entre elles sont pour la plupart distribuées dans les trois dimensions de l'espace. Un copolymère ou un oligomère réticulé forme un réseau tridimensionnel. Dans la pratique, la formation d'un réseau de copolymère ou d'oligomère est assurée par un test de solubilité. On peut s'assurer qu'un réseau de copolymères a été formé en plaçant le réseau de copolymère dans un solvant connu pour dissoudre les copolymères non réticulés de même nature chimique. Si le copolymère gonfle au lieu de se dissoudre, l'homme du métier sait qu'un réseau a été formé. La figure 3 illustre ce test de solubilité.

Par « réticulable » on entend un copolymère ou un oligomère susceptible d'être réticulé.

Par « réticulé de manière réversible » on entend un copolymère ou un oligomère réticulé dont les ponts sont formés par une réaction chimique réversible. La réaction chimique réversible peut se déplacer dans un sens ou dans un autre, entraînant un changement de structure du réseau de polymère. Le copolymère ou l'oligomère peut passer d'un état initial non réticulé à un état réticulé (réseau tridimensionnel de copolymères) et d'un état réticulé à un état initial non réticulé. Dans le cadre de la présente invention, les ponts qui se forment entre les chaînes de copolymères ou d'oligomère sont labiles. Ces ponts peuvent se former ou s'échanger grâce à une réaction chimique qui est réversible. Dans le cadre de la présente invention, la réaction chimique réversible est une réaction de transestérification entre des fonctions diols d'un oligomère (copolymère A1) et des fonctions ester boronique d'un agent de réticulation (composé A2). Les ponts formés sont des liaisons de type ester boronique. Ces liaisons ester boronique sont covalentes et labiles du fait de la réversibilité de la réaction de transestérification.

La quantité de liaisons ester boronique (ou lien ester boronique) pouvant s'établir entre les oligomères polydiols A1 et les composés A2 est ajustée par l'homme du métier au moyen d'une sélection appropriée de l'oligomère polydiol A1, du composé A2 et de la composition du mélange.

En outre, l'homme du métier sait sélectionner la structure du composé A2 en fonction de la structure de l'oligomère A1. De préférence, lorsque dans l'oligomère A1 comprenant au moins un monomère M1 dans lequel y=1, alors le composé A2 de formule générale (III) ou le copolymère ou l'oligomère A2 comprenant au moins un monomère M4 de formule (IV) sera choisi de de préférence avec $w_1$= 1, $w_2$=1 et t=1, respectivement.

En contrôlant le taux d'association de l'oligomère polydiol A1 et du composé A2, notamment de l'oligomère poly(ester boronique), on module la viscosité et le comportement rhéologique de cette composition. Lorsqu'il est présent, le composé exogène A4 et/ou A5 permet de moduler la viscosité de cette composition selon l'utilisation désirée.

Dans un mode de réalisation préférée de l'invention, le composé exogène A4 est de même nature chimique que le composé diol A3 libéré in situ par réaction de transestérification entre l'oligomère polydiol A1 et le composé A2, notamment l'oligomère poly(ester boronique). Selon ce mode de réalisation, la quantité totale de diols libres présente dans ladite composition est strictement supérieure à la quantité de composés diols libérés in situ. Par « diols libres », on entend les fonctions diol qui sont susceptibles de pouvoir former un lien chimique de type ester boronique par réaction de transestérification. Par « quantité totale de diols libres », on entend au sens de la présente demande, le nombre total de fonctions diol susceptibles de pouvoir former un lien chimique de type ester boronique par transestérification.

Selon ce mode de réalisation, la quantité totale de diols libres est toujours égale à la somme du nombre de moles de composés exogènes diols A4 et du nombre (exprimé en mol) de fonctions diols de l'oligomère polydiol A1. En d'autres termes, si dans la composition d'additifs, on a :

- i moles de composés exogènes diols A4 et
- j mol de l'oligomère polydiol A1,
  la quantité totale de diol libres sera à tout instant (donc quel que soit le degré d'association entre l'oligomère polydiol A1 et le composé A2, notamment le l'oligomère poly(ester boronique) A2) = i + j*le nombre moyen de diols par chaîne de d'oligomère A1 (unité : mol).

La quantité de diols libérés in situ dans le cadre des réactions de transestérification entre A1 et A2 est égale au nombre de fonctions ester boronique reliant les oligomères A1 et A2.

L'homme du métier sait sélectionner la structure chimique et la quantité de composés exogènes A4 qu'il ajoute à la composition d'additifs en fonction du pourcentage molaire de fonction ester boronique du composé A2, notamment en fonction de l'oligomère poly(ester boronique), pour moduler les comportements rhéologique de la composition.

Avantageusement, la teneur en oligomère A1 dans la composition va de 0,1% à 50,0% en poids par rapport au poids total de la composition, de préférence va de 0,25% à 40% en poids par rapport au poids total de la composition finale, de manière plus préférée de 1% à 40% en poids par rapport au poids total de la composition finale.

Avantageusement, la teneur en composé A2 dans la composition va de 0,1% à 50,0% en poids par rapport au poids total de la composition, de préférence va de 0,25% à 40% en poids par rapport au poids total de la composition finale, de manière plus préférée de préférence de 1% à 40% en poids par rapport au poids total de la composition finale.

Dans un mode de réalisation, la teneur en oligomère A1 dans la composition va de 0,1 à 50,0% en poids par rapport au poids total de la composition et la teneur en composé A2, notamment en oligomère ester boronique dans la composition va de 0,1% à 50,0% en poids par rapport au poids total de la composition.

Préférentiellement, le ratio massique entre l'oligomère polydiol A1 et composé A2 (ratio A1/A2) dans la composition va de 0,002 à 500, de préférence de 0,05 à 20, de manière encore plus préférée de 0,1 à 10.

Dans un mode de réalisation, la composition de l'invention se présente sous forme d'une composition-mère. Par « composition-mère » on entend, une composition dont l'homme du métier pourra faire des solutions-filles par prélèvement d'une certaine quantité de solution mère complétée par l'apport d'une quantité nécessaire de diluant (solvant ou autre) pour obtenir une concentration souhaitée. Une composition-fille est donc obtenue par dilution d'une composition-mère.

Un milieu hydrophobe peut être un solvant, une huile minérale, une huile naturelle, une huile synthétique.

Dans un mode de réalisation, la composition de l'invention peut comprendre en outre au moins un additif choisi parmi le groupe formé par les thermoplastiques, les élastomères, les élastomères thermoplastiques, les polymères thermodurcissables, les pigments, les colorants, les charges, les plastifiants, les fibres, les antioxydants, les additifs pour lubrifiants, les agents de compatibilité, les agents anti-mousses, les additifs dispersants, les promoteurs d'adhérences et les stabilisants.

✓ Procédé de préparation des nouvelles compositions d'additifs de l'invention

Les nouvelles compositions d'additifs de l'invention sont préparées par des moyens bien connus de l'homme du métier. Par exemple, il suffit à l'homme du métier notamment de :

- prélever une quantité voulue d'une solution comprenant l'oligomère polydiol A1 tel que défini ci-dessus ;
- prélever une quantité voulue d'une solution comprenant le composé A2 tel que défini ci-dessus ; notamment une quantité voulue d'une solution comprenant le l'oligomère poly(ester boronique) tel que défini précédemment ; et
- éventuellement prélever une quantité voulue d'une solution comprenant le composé exogène A4 et/ou A5 tel que défini ci-dessus
- mélanger les solutions prélevées, soit simultanément, soit séquentiellement, pour obtenir la composition de l'invention.

L'ordre d'ajout des composés n'a pas d'influence dans la mise en oeuvre du procédé de préparation de la composition d'additifs.

✓ Utilisation des nouvelles compositions de l'invention

Les compositions de l'invention peuvent être utilisées dans tous les milieux dont la viscosité varie en fonction de la température. Les compositions de l'invention permettent d'épaissir un fluide et de moduler la viscosité en fonction de la température d'utilisation. La composition d'additifs selon l'invention peut être utilisée dans les domaines aussi variés que la récupération améliorée du pétrole, l'industrie papetière, les peintures, les additifs alimentaires, la formulation cosmétique ou pharmaceutique.

Elles sont plus particulièrement avantageuses pour une utilisation comme additif lubrifiant dans un moteur.

➢ Composition lubrifiante selon l'invention

Un autre objet de la présente invention concerne une composition lubrifiante résultant du mélange d'au moins :

- une huile lubrifiante,
- un oligomère polydiol A1 tel que défini précédemment,
- un composé A2, tel que défini précédemment, comprenant au moins deux fonctions esters boroniques et pouvant

s'associer avec ledit oligomère polydiol A1 par au moins une réaction de transestérification,
- éventuellement un composé exogène A4 et/ou A5 tels que définis précédemment.

Les préférences et définitions décrites pour les formules générales (I), (I-A), (I-B), (II-A), (II-B), (X) s'appliquent également à l'oligomère A1 polydiol utilisée dans les compositions lubrifiantes de l'invention.

Les préférences et définitions décrites pour les formules générales (III), (IV), (V) et (X) s'appliquent également au composé A2 ester boronique utilisé dans les compositions lubrifiantes de l'invention.

Les compositions lubrifiantes selon l'invention ont l'avantage de présenter une viscosité plus stable vis-à-vis d'une modification de la température par rapport au comportement de l'huile de base. De manière avantageuse, la viscosité de la composition lubrifiante est ainsi contrôlée et dépend moins des fluctuations de température. En outre, pour une température donnée d'utilisation, il est possible de moduler la viscosité de la composition lubrifiante et son comportement rhéologique en jouant sur la quantité de composés diols ou esters boroniques ajoutés dans la composition lubrifiante. Enfin, les compositions lubrifiantes de l'invention ont une stabilité thermique améliorée, une stabilité à l'oxydation améliorée, un indice de viscosité amélioré, une résistance au cyclage améliorée et une meilleure reproductibilité de performances au cours du temps. Elles ont plus particulièrement une meilleure tenue à la dégradation mécanique.

o ***Huile lubrifiante***

Par « huile » on entend un corps gras liquide à température ambiante (25°C) et pression atmosphérique (760 mm de Hg soir $10^5$ Pa).

Par « huile lubrifiante » on entend une huile qui atténue le frottement entre deux pièces en mouvements en vue de faciliter le fonctionnement de ces pièces. Les huiles lubrifiantes peuvent être d'origine naturelle, minérale ou synthétique.

Les huiles lubrifiantes d'origine naturelle peuvent être des huiles d'origine végétale ou animale, de préférence des huiles d'origine végétale telles que l'huile de colza, l'huile de tournesol, l'huile de palme, l'huile de coprah...

Les huiles lubrifiantes d'origine minérale sont d'origine pétrolière et sont extraites de coupes pétrolières provenant de la distillation atmosphérique et sous vide du pétrole brut. La distillation peut être suivie d'opérations de raffinage telles que l'extraction au solvant, le désalphatage, le déparaffinage au solvant, l'hydrotraitement, l'hydrocraquage, l'hydroisomérisation, l'hydrofinition... A titre illustratif, on peut citer les huiles de base minérales paraffiniques telle que l'huile Bright Stock Solvent (BSS), les huiles de base minérales napthéniques, les huiles minérales aromatiques, les bases minérales hydroraffinées dont l'indice de viscosité est d'environ 100, les bases minérales hydrocraquées dont l'indice de viscosité est compris entre 120 et 130, les bases minérales hydroisomérisées dont l'indice de viscosité est compris entre 140 et 150.

Les huiles lubrifiantes d'origine synthétique (ou base synthétiques) proviennent comme leur nom l'indique de la synthèse chimique telles que l'addition d'un produit sur lui-même ou polymérisation, ou l'addition d'un produit sur un autre comme l'estérification, l'alkylation, la fluoration, etc., de composants provenant de la pétrochimie, la carbochimie, et de la chimie minérale tels que : oléfines, aromatiques, alcools, acides, composés halogénés, phosphorés, siliciés, etc. A titre illustratif, on peut citer :

- les huiles synthétiques à base d'hydrocarbures de synthèse telles que les polyalphaoléfines (PAO), les polyoléfines internes (PIO), les polybutènes et polyisobutènes (PIB), les -alkylbenzènes, les polyphényles alkylés ;
- les huiles synthétiques à base d'esters telles que les esters de diacides, les esters de néopolyols ;
- les huiles synthétiques à base de polyglycols telles que les monoalkylèneglycols, les polyalkylèneglycols et les monoéthers de polyalkylèneglycols ;
- les huiles synthétiques à base d'ester-phosphates ;
- les huiles synthétiques à base de dérivés siliciés telles que les huiles silicones ou les polysiloxanes.

Les huiles lubrifiantes qui peuvent être utilisées dans la composition de l'invention peuvent être choisies parmi n'importe quelles huiles des groupes I à V spécifiées dans les directives de l'API (Base Oil Interchangeability Guidelines de l'American Petroleum Institute (API)) (ou leurs équivalents selon la classification ATIEL (Association Technique de l'industrie Européenne des Lubrifiants) telles que résumées ci-dessous :

| | Teneur en composés saturés* | Teneur en soufre** | Indice de viscosité (VI)*** |
|---|---|---|---|
| Groupe I Huiles minérales | < 90 % | > 0.03 % | 80 ≤ VI < 120 |
| Groupe II Huiles hydrocraquées | ≥ 90 % | ≤ 0.03 % | 80 ≤ VI < 120 |

(suite)

| | Teneur en composés saturés* | Teneur en soufre** | Indice de viscosité (VI)*** |
|---|---|---|---|
| Groupe III Huiles hydrocraquées ou hydro-isomérisées | ≥ 90 % | ≤ 0.03 % | ≥ 120 |
| Groupe IV | (PAO) Polyalphaoléfines | | |
| Groupe V | Esters et autres bases non incluses dans bases groupes I à IV | | |
| * mesuré selon la norme ASTM D2007<br>** mesuré selon les normes ASTM D2622, ASTM D4294, ASTM D4927 et ASTM D3120<br>*** mesuré selon la norme ASTM D2270 | | | |

Les compositions de l'invention peuvent comprendre une ou plusieurs huiles lubrifiantes. L'huile lubrifiante ou le mélange d'huile lubrifiante est l'ingrédient majoritaire dans la composition lubrifiante. On parle alors d'huile de base lubrifiante. Par ingrédient majoritaire, on entend que l'huile lubrifiante ou le mélange d'huiles lubrifiantes représente au moins 51 % en poids par rapport au poids total de la composition.

De préférence, l'huile lubrifiante ou le mélange d'huiles lubrifiantes représente au moins 70 % en poids par rapport au poids total de la composition.

Dans un mode de réalisation de l'invention, l'huile lubrifiante est choisie dans le groupe formés par les huiles du groupe I, du groupe II, du groupe III, du groupe IV, du groupe V de la classification API et l'un de leur mélange. De préférence, l'huile lubrifiante est choisie parmi le groupe formé par les huiles du groupe III, du groupe IV, du groupe V de la classification API et leur mélange. De préférence, l'huile lubrifiante est une huile du groupe III de la classification API.

L'huile lubrifiante a une viscosité cinématique à 100°C mesurée selon la norme ASTM D445 allant de 2 à 150 cSt, de manière préférée allant de 2 à 15 cSt.

◦ **Additifs fonctionnels**

Dans un mode de réalisation, la composition de l'invention peut comprendre en outre un ou plusieurs additifs fonctionnels choisis parmi le groupe formé par les détergents, les additifs anti-usure, les additifs extrême pression, les antioxydants, les polymères améliorant l'indice de viscosité, les améliorants de point d'écoulement, les anti-mousse, les épaississants, les additifs anticorrosion, les dispersants, les modificateurs de frottements et leurs mélanges.

Le ou les additifs fonctionnels qui sont ajoutés à la composition de l'invention sont choisis en fonction de l'utilisation finale de la composition lubrifiante. Ces additifs peuvent être introduits de deux façons différentes :

- soit chaque additif est ajouté isolément et séquentiellement dans la composition,
- soit l'ensemble des additifs est ajouté simultanément dans la composition, les additifs sont dans ce cas généralement disponibles sous forme d'un paquet, appelé paquet d'additifs.

L'additif fonctionnel ou les mélanges d'additifs fonctionnels, lorsqu'ils sont présents, représentent de 0,1 à 10% en poids par rapport au poids total de la composition.

✓ **Les détergents :**

Ces additifs réduisent la formation de dépôts à la surface des pièces métalliques par dissolution des produits secondaires d'oxydation et de combustion. Les détergents utilisables dans les compositions lubrifiantes selon la présente invention sont bien connus de l'homme de métier. Les détergents communément utilisés dans la formulation de compositions lubrifiantes sont typiquement des composés anioniques comportant une longue chaîne hydrocarbonée lipophile et une tête hydrophile. Le cation associé est typiquement un cation métallique d'un métal alcalin ou alcalino-terreux. Les détergents sont préférentiellement choisis parmi les sels de métaux alcalins ou alcalino-terreux d'acides carboxyliques, sulfonates, salicylates, naphténates, ainsi que les sels de phénates. Les métaux alcalins et alcalino-terreux sont préférentiellement le calcium, le magnésium, le sodium ou le baryum. Ces sels métalliques peuvent contenir le métal en quantité approximativement stoechiométrique ou bien en excès (en quantité supérieure à la quantité stoechiométrique). Dans ce dernier cas, on a affaire à des détergents dits surbasés. Le métal en excès apportant le caractère surbasé au détergent se présente sous la forme de sels métalliques insolubles dans l'huile, par exemple carbonate, hydroxyde, oxalate, acétate, glutamate, préférentiellement carbonate.

✓ **Les additifs anti-usure et les additifs extrême pression :**

Ces additifs protègent les surfaces en frottement par formation d'un film protecteur adsorbé sur ces surfaces. Il existe une grande variété d'additifs anti-usure et extrême pression. A titre illustratifs on peut citer les additifs phosphosoufrés comme les alkylthiophosphates métalliques, en particulier les alkylthiophosphates de zinc, et plus spécifiquement les dialkyldithiophosphates de zinc ou ZnDTP, les phosphates d'amines, les polysulfures, notamment les oléfines soufrées et les dithiocarbamates métalliques.

✓ **Les antioxydants** :

Ces additifs retardent la dégradation de la composition. La dégradation de la composition peut se traduire par la formation de dépôts, la présence de boues, ou une augmentation de la viscosité de la composition. Les antioxydants agissent comme inhibiteurs radicalaires ou destructeurs d'hydropéroxydes. Parmi les antioxydants couramment employés on trouve les antioxydants de type phénolique ou aminé.

✓ **Les anticorrosions** :

Ces additifs couvrent la surface d'un film qui empêche l'accès de l'oxygène à la surface du métal. Ils peuvent parfois neutraliser les acides ou certains produits chimiques pour éviter la corrosion du métal. A titre illustratif, on peut citer par exemple le dimercaptothiadiazole (DMTD), les benzotriazoles, les phosphites (capture du soufre libre).

✓ **Les polymères améliorant l'indice de viscosité** :

Ces additifs permettent de garantir une bonne tenue à froid et une viscosité minimale à haute température de la composition. A titre illustratif, on peut citer par exemple les esters polymères, les oléfines copolymères (OCP), ou les polyméthacrylates (PMA).

✓ **Les améliorants de point d'écoulement** :

Ces additifs améliorent le comportement à froid des compositions, en ralentissant la formation de cristaux de paraffine. Ce sont par exemple des polyméthacrylates d'alkyle, des polyacrylates, des polyarylamides, des polyalkylphénols, des polyalkylnaphtalènes et des polystyrènes alkylés.

✓ **Les anti-mousse** :

Ces additifs ont pour effet de contrer l'effet des détergents. A titre illustratif, on peut citer les polyméthylsiloxanes et les polyacrylates.

✓ **Les épaississants** :

Les épaississants sont des additifs utilisés surtout pour la lubrification industrielle et permettent de formuler des lubrifiants de plus forte viscosité que les compositions lubrifiantes pour moteur. A titre illustratif, on peut citer les polysiobutènes ayant une masse molaire en poids de 10 000 à 100 000 g/mol.

✓ **Les dispersants** :

Ces additifs assurent le maintien en suspension et l'évacuation des contaminants solides insolubles constitués par les produits secondaires d'oxydation qui se forment au cours de l'utilisation de la composition. A titre illustratif, on peut citer par exemple les succinimides, les PIB (polyisobutène) succinimides et les bases de Mannich.

✓ **Les modificateurs de frottements** :

Ces additifs améliorent le coefficient de frottement de la composition. A titre illustratif, on peut citer le dithiocarbamate de molybdène, les amines ayant au moins une chaîne hydrocarbonée d'au moins 16 atomes de carbone.

◦ ***Teneurs en composés des compositions lubrifiantes***

Avantageusement, la teneur en oligomère A1 dans la composition lubrifiante va de 0,25% à 40% en poids par

rapport au poids total de la composition lubrifiante, de préférence de 1% à 40% en poids par rapport au poids total de la composition lubrifiante.

Avantageusement, la teneur en composé A2 va de 0,25% à 40% en poids par rapport au poids total de la composition lubrifiante, de préférence de préférence de 1 à 40% en poids par rapport au poids total de la composition lubrifiante.

Préférentiellement, le ratio massique (ratio A1/A2) entre l'oligomère polydiol A1, et le composé A2, va de 0,002 à 500, de préférence de 0,05 à 20, de manière encore plus préférée de 0,1 à 10.

Dans un mode de réalisation, la somme des masses de l'oligomère A1 et du composé A2, va de 0,2 à 50%, avantageusement de 0,5 à 40% par rapport à la masse totale de la composition lubrifiante, de préférence de 2% à 40% par rapport à la masse totale de la composition lubrifiante et la masse d'huile lubrifiante va de 50% à 99,8 % par rapport à la masse totale de la composition lubrifiante.

Pour les applications moteur, avantageusement, la somme des masses de l'oligomère A1 et du composé A2 représente de 1 à 35%, par rapport à la masse totale de la composition lubrifiante.

Pour les applications transmission, avantageusement, la somme des masses de l'oligomère A1 et du composé A2 représente de 1 à 40%, par rapport à la masse totale de la composition lubrifiante.

Dans un mode de réalisation, le pourcentage molaire de composé exogène A4 dans la composition lubrifiante va de 0,025% à 5000%, de préférence va de 0,1% à 1000%, de manière plus préférée de 0,5% à 500%, de manière encore plus préférée de 1% à 150% par rapport aux fonctions ester boronique du composé A2, notamment de l'oligomère poly(ester boronique).

Dans un autre mode de réalisation, le pourcentage molaire de composé exogène A5 dans la composition lubrifiante va de 0,025% à 5000%, de préférence va de 0,1% à 1000%, de manière plus préférée de 0,5% à 500%, de manière encore plus préférée de 1% à 150% par rapport aux fonctions diols du composé A1, notamment de l'oligomère polydiol.

Dans un mode de réalisation, la composition lubrifiante de l'invention résulte du mélange de :

- 0,25% à 40 % en poids d'au moins un oligomère polydiol A1 tel que défini précédemment, par rapport au poids total de la composition lubrifiante ;
- 0,25% à 40 % en poids d'au moins d'au moins un composé A2 tel que défini précédemment ; par rapport au poids total de la composition lubrifiante ; et
- éventuellement 0,1% à 10 % en poids d'au moins un composé exogène A4 tel que défini précédemment, par rapport au poids total de la composition lubrifiante,
- éventuellement 0,1% à 10 % en poids d'au moins un composé exogène A5 tel que défini précédemment, par rapport au poids total de la composition lubrifiante, et
- 20% à 99,5 % en poids d'au moins une huile lubrifiante tel que défini précédemment, par rapport au poids total de la composition lubrifiante.

Dans un autre mode de réalisation, la composition lubrifiante de l'invention résulte du mélange de :

- 0,25% à 40 % en poids d'au moins un oligomère polydiol A1 tel que défini précédemment, par rapport au poids total de la composition lubrifiante ;
- 0,25% à 40 % en poids d'au moins d'au moins un composé A2 tel que défini précédemment ; par rapport au poids total de la composition lubrifiante ; et
- éventuellement 0,1% à 10 % en poids d'au moins un composé exogène A4 tel que défini précédemment, par rapport au poids total de la composition lubrifiante, et
- éventuellement 0,1% à 10 % en poids d'au moins un composé exogène A5 tel que défini précédemment, par rapport au poids total de la composition lubrifiante,
- 0,5% à 15 % en poids d'au moins un additif fonctionnel tel que défini précédemment, par rapport au poids total de la composition lubrifiante, et
- 5% à 99 % en poids d'au moins une huile lubrifiante tel que défini précédemment, par rapport au poids total de la composition lubrifiante.

Un autre objet de la présente invention est une composition pour lubrifier au moins un moteur, ladite composition comprenant, notamment consiste essentiellement en, une composition résultant du mélange de :

- 70% à 99% en poids, avantageusement de 70 à 97% en poids, d'une huile lubrifiante, et
- 1% à 30% en poids, avantageusement de 3 à 30 % en poids, d'un mélange d'au moins un oligomère A1 tel que défini précédemment, et d'au moins un composé ester boronique A2 tel que défini précédemment ; et
- éventuellement 0,1% à 10% en poids au moins un composé exogène A4 tel que défini précédemment ;

- éventuellement 0,1% à 10% en poids au moins un composé exogène A5 tel que défini précédemment ;

la composition ayant une viscosité cinématique à 100°C mesurée selon la norme ASTM D445 allant de 3,8 à 26,1 cSt ; les pourcentages en poids étant exprimé par rapport au poids total de ladite composition.

Dans une composition pour lubrifier au moins un moteur telle que définie ci-dessus, les oligomères A1 et les composés A2 tels que définis précédemment peuvent s'associer et s'échanger de manière réversible, notamment en présence du composé exogène A4 et/ou A5 ; mais ils ne forment pas de réseaux tridimensionnels. Ils ne sont pas réticulés.

Dans un mode de réalisation, la composition pour lubrifier au moins un moteur comprend en outre au moins un additif fonctionnel choisi parmi le groupe formé par les détergents, les additifs anti-usure, les additifs extrême pression, les antioxydants supplémentaires, les additifs anticorrosion, les polymères améliorant l'indice de viscosité, les améliorants de point d'écoulement, les anti-mousse, les épaississants, les dispersants, les modificateurs de frottements et leurs mélanges.

Dans un mode de réalisation de l'invention, la composition pour lubrifier au moins un moteur, ladite composition comprenant, notamment consiste essentiellement en, une composition résultant du mélange de :

- 55% à 98,5% en poids d'une huile lubrifiante, et
- 1% à 30% en poids d'un mélange d'au moins un oligomère A1 tel que défini précédemment, et d'au moins un composé A2 tel que défini précédemment ; et
- éventuellement 0,1% à 10% en poids au moins un composé exogène A4 tel que défini précédemment ;
- éventuellement 0,1% à 10% en poids au moins un composé exogène A5 tel que défini précédemment ;
- 0,5 à 15% en poids d'au moins un additif fonctionnel choisi parmi le groupe formé par les détergents, les additifs anti-usure, les additifs extrême pression, les antioxydants supplémentaires, les additifs anticorrosion, les polymères améliorant l'indice de viscosité, les améliorants de point d'écoulement, les anti-mousse, les épaississants, les dispersants, les modificateurs de frottements et leurs mélanges ;

la composition ayant une viscosité cinématique à 100°C mesurée selon la norme ASTM D445 allant de 3,8 à 26,1 cSt ; les pourcentages en poids étant exprimé par rapport au poids total de ladite composition.

Les définitions et préférences relatives aux huiles lubrifiantes, aux oligomères A1, aux composés ester boronique A2 et aux composés exogènes A4 et A5 s'appliquent également aux compositions pour lubrifier au moins un moteur.

Un autre objet de la présente invention est une composition pour lubrifier au moins une transmission, telle que les boîtes de vitesses manuelles ou automatiques.

Ainsi un autre objet de la présente invention est une composition pour lubrifier au moins une transmission, ladite composition comprenant, notamment consiste essentiellement en une composition résultant du mélange de :

- 50% à 95% en poids d'une huile lubrifiante, et
- 5% à 40% en poids d'un mélange d'au moins un oligomère A1 tel que défini précédemment, et d'au moins un composé ester boronique A2 tel que défini précédemment ; et
- éventuellement 0,1% à 10% en poids au moins un composé exogène A4 tel que défini précédemment ;
- éventuellement 0,1% à 10% en poids au moins un composé exogène A5 tel que défini précédemment ;

la composition ayant une viscosité cinématique à 100°C mesurée selon la norme ASTM D445 allant de 4,1 à 41 cSt, les pourcentages en poids étant exprimé par rapport au poids total de ladite composition.

Dans une composition pour lubrifier au moins une transmission telle que définie ci-dessus, les oligomères A1 et les composés ester boronique A2 tels que définis précédemment peuvent s'associer et s'échanger de manière réversible, notamment en présence du composé exogène A4 et/ou A5 ; mais ils ne forment pas de réseaux tridimensionnels. Ils ne sont pas réticulés.

Dans un mode de réalisation la composition pour lubrifier au moins une transmission comprend en outre au moins un additif fonctionnel choisi parmi le groupe formé par les détergents, les additifs anti-usure, les additifs extrême pression, les antioxydants supplémentaires, les additifs anticorrosion, les polymères améliorant l'indice de viscosité, les améliorants de point d'écoulement, les anti-mousses, les épaississants, les dispersants, les modificateurs de frottements et leurs mélanges.

Dans un mode de réalisation de l'invention, la composition pour lubrifier au moins une transmission comprend, notamment consiste essentiellement en, une composition résultant du mélange de :

- 50% à 94,9% en poids d'une huile lubrifiante, et
- 5% à 35% en poids d'un mélange d'au moins un oligomère A1 tel que défini précédemment, et d'au moins un composé ester boronique A2 tel que défini précédemment ; et
- éventuellement 0,1% à 10% en poids au moins un composé exogène A4 tel que défini précédemment ;

- éventuellement 0,1% à 10% en poids au moins un composé exogène A5 tel que défini précédemment ;
- 0,1% à 15% en poids d'au moins un additif fonctionnel choisi parmi le groupe formé par les détergents, les additifs anti-usure, les additifs extrême pression, les antioxydants supplémentaires, les additifs anticorrosion, les polymères améliorant l'indice de viscosité, les améliorants de point d'écoulement, les anti-mousses, les épaississants, les dispersants, les modificateurs de frottements et leurs mélanges ;

la composition ayant une viscosité cinématique à 100°C mesurée selon la norme ASTM D445 allant de 4,1 à 41 cSt les pourcentages en poids étant exprimé par rapport au poids total de ladite composition.

Les définitions et préférences relatives aux huiles lubrifiantes, aux oligomères A1, aux composés ester boronique A2 et aux composés exogènes A4 et/ou A5 s'appliquent également aux compositions pour lubrifier au moins une transmission.

### ✓ Procédé de préparation des compositions lubrifiantes de l'invention

Les compositions lubrifiantes de l'invention sont préparées par des moyens bien connus de l'homme du métier. Par exemple, il suffit à l'homme du métier notamment de :

- prélever une quantité voulue d'une solution comprenant l'oligomère polydiol A1 tel que défini ci-dessus, ;
- prélever une quantité voulue d'une solution comprenant le composé A2 ester boronique tel que défini précédemment ;
- éventuellement, prélever une quantité voulue d'une solution comprenant le composé exogène A4 et / ou A5 tel que défini ci-dessus
- mélanger soit simultanément, soit séquentiellement les solutions prélevées dans une huile de base lubrifiante, pour obtenir la composition lubrifiante de l'invention.

L'ordre d'ajout des composés n'a pas d'influence dans la mise en oeuvre du procédé de préparation de la composition lubrifiante.

### ✓ Propriétés des compositions lubrifiantes selon l'invention

Les compositions lubrifiantes de l'invention résultent du mélange de polymères associatifs qui présentent la propriété d'augmenter la viscosité de l'huile lubrifiante par des associations. Les compositions lubrifiantes selon l'invention présentent l'avantage que ces associations ou réticulation sont réversibles et éventuellement que le taux d'association ou de réticulation peut être contrôlé grâce à l'ajout d'un composé diol supplémentaire. En outre, elles présentent une stabilité thermique améliorée, un indice de viscosité amélioré, une stabilité à l'oxydation améliorée, de meilleures performances de cyclage, et une meilleure reproductibilité de performances au cours du temps, ainsi qu'une meilleure tenue à la dégradation mécanique.

L'homme du métier sait ajuster les différents paramètres des différents constituants de la composition pour obtenir une composition lubrifiante dont la viscosité est adaptée à l'usage.

La quantité de liaisons ester boronique (ou lien ester boronique) pouvant s'établir entre les oligomères polydiols A1 et les composés A2, est ajustée par l'homme du métier au moyen d'une sélection appropriée de l'oligomère polydiol A1, du composé A2, éventuellement du composé exogène A4 et/ou A5, et notamment du pourcentage molaire de composé exogène A4 et/ou A5.

En outre, l'homme du métier sait sélectionner la structure du composé A2, en fonction de la structure de l'oligomère A1. De préférence, lorsque dans l'oligomère A1, comprenant au moins un monomère M1 dans lequel y=1, alors le composé A2 de formule générale (III) ou l'oligomère A2 comprenant au moins un monomère M4 de formule (IV) sera choisi de préférence avec $w_1$= 1, $w_2$=1 et t=1, respectivement.

Par ailleurs, l'homme du métier sait ajuster notamment :

- le pourcentage molaire de monomère M1 portant des fonctions diols dans l'oligomère polydiol A1 ;
- le pourcentage molaire de monomère M4 portant des fonctions ester boronique dans l'oligomère ester boronique A2,
- la longueur moyenne des chaînes latérales de l'oligomère polydiol A1 ;
- la longueur moyenne des chaînes latérales du de l'oligomère ester boronique A2,
- la longueur du monomère M4 de l'oligomère ester boronique A2,
- le degré de polymérisation moyen de l'oligomère polydiol A1, et de l'oligomère ester boronique A2,
- le pourcentage massique de l'oligomère polydiol A1,
- le pourcentage massique du composé ester boronique A2,
- éventuellement la quantité de composé exogène A4 et/ou A5,

➢ Procédé pour moduler la viscosité d'une composition lubrifiante

Un autre objet de la présente invention est un procédé pour moduler la viscosité d'une composition lubrifiante, le procédé comprenant au moins :

- la fourniture d'une composition lubrifiante résultant du mélange d'au moins une huile lubrifiante, d'au moins un oligomère polydiol A1 et d'au moins un composé A2 comprenant au moins deux fonctions esters boroniques et pouvant s'associer avec ledit oligomère polydiol A1 par au moins une réaction de transestérification, éventuellement l'ajout dans ladite composition lubrifiante d'au moins un composé exogène A4 et/ou A5.

Par « moduler la viscosité d'une composition lubrifiante », on entend au sens de la présente invention, une adaptation de la viscosité en fonction de l'utilisation de la composition lubrifiante. Un tel procédé est décrit de façon détaillée dans WO2016/113229.

➢ Autres objets selon l'invention

Un autre objet de la présente invention est l'utilisation de la composition lubrifiante telle que définie ci-dessus pour lubrifier une pièce mécanique.
Dans la suite de la description, les pourcentages sont exprimés en poids par rapport au poids total de la composition lubrifiante.
Les compositions de l'invention sont utilisables pour lubrifier les surfaces des pièces que l'on trouve classiquement dans un moteur telles que le système pistons, segments, chemises.
Les compositions de l'invention peuvent être utilisées pour les moteurs ou transmissions des véhicules légers, des poids-lourds mais aussi des navires.
Un autre objet de la présente invention est un procédé de lubrification d'au moins une pièce mécanique, notamment au moins un moteur ou au moins une transmission, ledit procédé comprenant une étape dans laquelle ladite pièce mécanique est mise en contact avec au moins une composition lubrifiante telle que définie ci-dessus.
Les définitions et préférences relatives aux huiles lubrifiantes, aux oligomères A1, aux composés ester boronique A2 et le cas échéant aux composés exogènes A4 et/ou A5 s'appliquent également au procédé de lubrification d'au moins une pièce mécanique.

**Figures**

La figure 1 représente de manière schématique un copolymère statistique (P1), un copolymère à gradient (P2) et un copolymère à blocs (P3), chaque rond représente un motif monomère. La différence de structure chimique entre les monomères est symbolisée par une couleur différente (gris clair/noir).
La figure 2 illustre de manière schématique les réactions d'échanges de liens esters boroniques entre deux oligomères polydiols (A1-1 et A1-2) et deux oligomères di-esters boroniques (A2-1 et A2-2) en présence de diols.
La figure 3 illustre et représente de manière schématique la réticulation de la composition selon l'invention dans du tétrahydrofurane (THF).
La figure 4 représente de manière schématique le comportement de la composition de l'invention en fonction d'un stimulus externe, dans cet exemple la température. Un oligomère (2) possédant des fonctions diols (fonction A) peut s'associer de manière réversible avec un oligomère (1) possédant des fonctions esters boroniques (fonction B) via une réaction de transestérification. Le groupement organique des fonctions ester boronique (fonction B) qui s'échange lors de la réaction de transestérification est un diol symbolisé par un croissant noir. Il se forme un lien chimique (3) de type ester boronique avec libération d'un composé diol.
La figure 5 est un graphique représentant les courbes de variation de la viscosité dynamique mesurée en fonction du taux de cisaillement appliqué aux compositions A et F à 40 °C. La courbe en (•) correspond à la composition A. La courbe en (■) correspond à la composition F. L'axe des abscisses du graphique représente les valeurs du taux de cisaillement en $s^{-1}$, l'axe des ordonnées représente les valeurs de la viscosité mesurée en mPa.s.
La figure 6 est un graphique représentant les courbes de variation de la viscosité dynamique mesurée en fonction du taux de cisaillement appliqué aux compositions A, B et F à 100 °C. La courbe en (•) correspond à la composition A. La courbe en (■) correspond à la composition F. L'axe des abscisses du graphique représente les valeurs du taux de cisaillement en $s^{-1}$, l'axe des ordonnées représente les valeurs de la viscosité mesurée en mPa.s.
La figure 7 est un graphique représentant les courbes de variation de la viscosité dynamique mesurée en fonction du taux de cisaillement appliqué aux compositions A, B et F à 150 °C. La courbe en (•) correspond à la composition

A. La courbe en (■) correspond à la composition F. L'axe des abscisses du graphique représente les valeurs du taux de cisaillement en $s^{-1}$, l'axe des ordonnées représente les valeurs de la viscosité mesurée en mPa.s.

**Partie expérimentale** :

Les exemples suivants illustrent l'invention sans la limiter.

**1. Synthèses**

1.1. Synthèse de l'oligomère polydiol

1.1.1. Monomères

> *Monomère M1 : méthacrylate porteur d'une fonction diol (mono-Diol)* :

Cette synthèse est réalisée selon le protocole décrit dans la demande WO2018/096253 (Partie expérimentale §1.1.1.).

> *Monomère M2 : méthacrylate de stéaryle (StMA)* :

Le méthacrylate de stéaryle est commercialisé par Sigma Aldrich® et TCI®.

> *Monomère M3 : styrène :*

Le styrène est commercialisé par Sigma Aldrich®.

1.1.2. Synthèse de l'oligomère o-Diol-2

La synthèse de l'oligomère o-Diol-2 s'effectue selon le schéma réactionnel suivant :

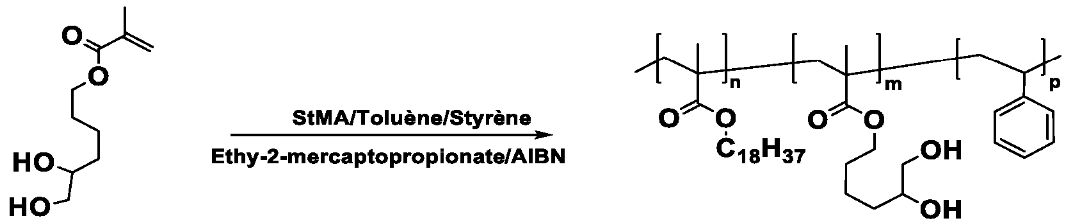


Dans un réacteur de 1L connecté à un réfrigérant, un thermomètre et une arrivée d'azote, 300 mL de toluène sont introduits. Le milieu réactionnel est dégazé par bullage d'azote et agité jusqu'à ce que la température atteigne 100°C. Ensuite, 10 mL d'une solution contenant le méthacrylate de stéaryle (StMA), le méthacrylate porteur d'une fonction diol (mono-Diol), le styrène et 1'éthyl-2-mercaptopropionate (Solution 1), et 25 mL d'une solution d'azobisisobutyronitrile (AIBN) dans le toluène (Solution 2) sont introduits dans le réacteur. Dès l'observation d'un dégagement gazeux, le restant de la Solution 1 et de la Solution 2 est ajouté sur une durée de 125 minutes. Les quantités introduites sont présentées dans le tableau 1.1 ci-dessous. La progression de la réaction est suivie par analyse SEC. Après 4 heures de polymérisation à 100°C, le milieu réactionnel est refroidi à température ambiante. Le polymère est précipité 3 fois dans 200 mL de méthanol. Les substances volatiles sont évaporées sous pression réduite à une température inférieure à 50 °C. Le produit est ensuite séché sous vide pendant 72h à 40°C afin d'éliminer les résidus de solvants. 96,3 g de solide pâteux blanc sont obtenus. Rendement : 80 %.

Tableau 1.1 : quantités introduites pour la synthèse de l'oligomère o-Diol-2

| Solution 1 : | Masse / Volume |
|---|---|
| Methacrylate de stéaryle | 100,33 g |
| Mono-Diol | 20,24 g |
| Styrène | 0,45 g |

(suite)

| Solution 1 : | Masse / Volume |
|---|---|
| Ethyl-2-mercaptopropionate | 6,92 g |
| Solution 2 : | Masse / Volume |
| AIBN | 1,42 g |
| Toluène | 100 mL |

*Caractérisation* :

L'oligomère obtenu comprend 22% molaire d'unités répétitives ayant des fonctions diol, 77% molaire d'unités répétitives StMA et 1% molaire d'unités répétitives styrène tel que déterminé par RMN $^1H$ (400 MHz, $CDCl_3$).

L'oligomère présente une masse molaire moyenne en nombre d'approximativement 3900 $g.mol^{-1}$ et un indice de polydispersité de 1,26 tels que déterminés par SEC dans le THF en utilisant une calibration poly(méthacrylate de méthyle) à 40°C.

1.2. Synthèse de l'oligomère ester boronique

1.2.1. Monomères

➢ *Monomère M4 : Monomère porteur d'une fonction ester boronique (mono-EB)* : Cette synthèse est réalisée selon le protocole décrit dans la demande WO2016/113229 (Partie expérimentale §2.1.).

1.2.2. Synthèse de l'oligomère o-EB-1

La synthèse de l'oligomère o-EB-1 s'effectue selon le schéma réactionnel suivant :

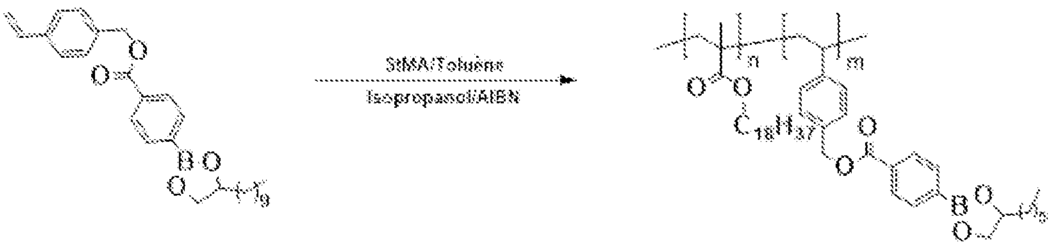


Dans un réacteur de 500 mL connecté à un réfrigérant, un thermomètre et une arrivée d'azote, sont introduits le méthacrylate de stéaryle, le monomère porteur d'une fonction ester boronique (mono-EB), l'isopropanol, l'AIBN et le toluène (Solution 3). Les quantités introduites sont présentées dans le tableau 1.3 ci-dessous. Le milieu réactionnel est dégazé par bullage d'azote pendant 30 minutes, agité puis porté à 86°C. Quand le milieu réactionnel est à 75°C et qu'un dégagement gazeux est observé, une solution de StMA et de mono-EB dans le toluène (Solution 4) est introduite goutte à goutte pendant une durée de 80 minutes. La progression de la réaction est suivie par analyse SEC. Après 3 heures de polymérisation à 80 °C, le milieu réactionnel est refroidi à température ambiante. Le polymère est précipité 3 fois dans 300 mL de méthanol. Les substances volatiles sont évaporées sous pression réduite à une température inférieure à 50 °C. Le produit est ensuite séché sous vide pendant 72h à 40°C afin d'éliminer les résidus de solvants. 115,6 g de solide blanc pâteux sont obtenus. Rendement : 87 %.

Tableau 1.3 : quantités introduites pour la synthèse de l'oligomère o-EB-1

| Solution 3 : | Masse / Volume |
|---|---|
| StMA | 11,95 g |
| mono-EB | 1,87 g |
| AIBN | 4,53 g |
| Toluène | 50 mL |

(suite)

| Solution 3 : | Masse / Volume |
|---|---|
| Isopropanol | 200 mL |
| Solution 4 : | Masse / Volume |
| StMA | 104,19 g |
| mono-EB | 15,39 g |
| Toluène | 150 mL |

*Caractérisation* :

L'oligomère obtenu comprend 90% molaire d'unités répétitives ayant des fonctions ester boronique et 10% molaire d'unités répétitives StMA tel que déterminé par RMN $^1H$ (400 MHz, $CDCl_3$).

L'oligomère présente une masse molaire moyenne en nombre d'approximativement 7100 $g.mol^{-1}$ et un indice de polydispersité de 1,74 tels que déterminés par SEC dans le THF en utilisant une calibration poly(méthacrylate de méthyle) à 40°C.

1.3. Synthèse de molécule diester boronique Di-EB

La synthèse de la molécule Di-EB s'effectue selon le schéma réactionnel suivant :

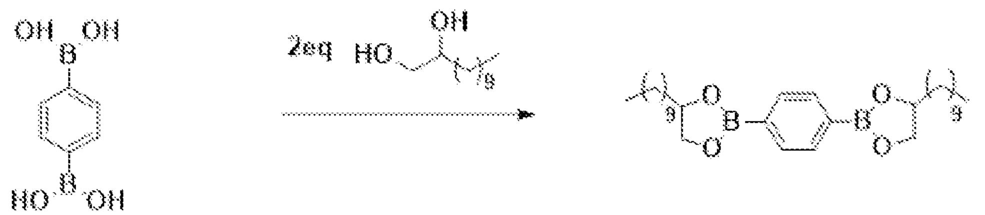


Dans un ballon tricol de 500 mL connecté à un Dean Stark, un réfrigérant et une arrivée d'azote, sont introduits : 38 mL d'eau distillée, 200 mL de toluène et 38,2 g d'acide 1-phenylenediboronique. Le mélange obtenu est sous forme de solide en suspension. 93,1 g de 1,2-dodecanediol sont ensuite additionnés. 200 mL du toluène restant sont ajoutés afin de faciliter le rinçage des parois du tricol. Ensuite, le milieu réactionnel est chauffé jusqu'à dissolution du solide. Le milieu est ensuite placé sous atmosphère d'azote, agité et chauffé à reflux pendant 16 heures. La température du milieu réactionnel monte de 97°C (point d'ébullition de l'azéotrope eau/toluène) à 111°C (point d'ébullition du toluène). L'eau évaporée par azéotrope est régulièrement prélevée du Dean-Stark. La progression de la réaction est effectuée en suivant la température de reflux et la quantité d'eau retirée du Dean Stark.

Après 16 heures, le milieu réactionnel est refroidi à température ambiante. Les substances volatiles sont évaporées sous pression réduite inférieure à 30 °C. Le solide blanc obtenu est séché à l'aide d'un évaporateur rotatif pendant 2 heures. 108,1 g de solide blanc sont obtenus. Rendement = 94%.

*Caractérisation* :

RMN $^1H$ (400 MHz, Acétone D6 avec du TCNB (2,3, 4, 5-tetrachloronitrobenzene)) :
Pureté > 99%.

1.4. Synthèse de polymère polydiol p-Diol (comparatif)

La synthèse du polymère polydiol p-Diol s'effectue selon le schéma réactionnel suivant :

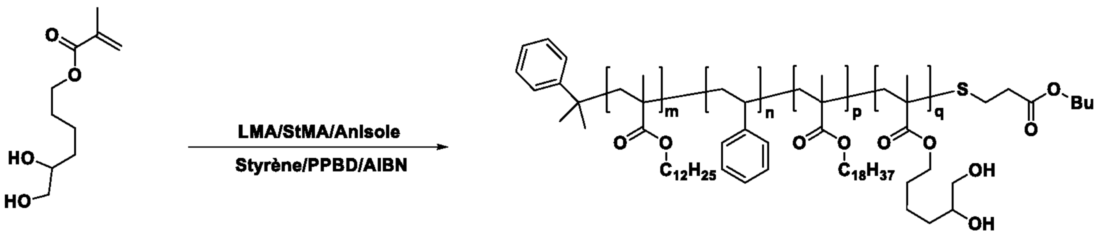


Dans un réacteur de 4L connecté à un réfrigérant, une arrivée d'azote et une ampoule de coulée de 500 mL sont introduits : 734,4 g d'anisole, 36,2 g d'une solution de dithiobenzoate de cumyle, 45,3 g de méthacrylate de lauryle, 45,2 g de méthacrylate de stéaryle, 9,3 g de styrène et 2,7 g de mono-Diol. 181,2 g de méthacrylate de lauryle, 180,9 g de méthacrylate de stéaryle et 37,1 g de styrène sont introduits dans l'ampoule de coulée.

Le réacteur, l'ampoule de coulée et le reste du mono-Diol (50,3 g) sont placés sous atmosphère d'azote. Le milieu réactionnel est chauffé sous agitation à T = 80 ° C. La progression de la réaction est suivie par analyse SEC. Une solution de 0,2660 g d'AIBN dans 3 mL d'anisole est introduite lentement pendant une durée de 15 minutes. Le reste du mono-Diol est alors introduit dans une pompe à seringue, les autres monomères sont introduits en utilisant l'ampoule de coulée pendant une durée d'environ 30h.

Trois solutions contenant respectivement 0,1362 g, 0,1338 g et 0,1450 g d'AIBN dans 3 mL d'anisole sont préparées puis introduites respectivement à t= 4h, t= 25h et t= 45h pendant une durée d'environ 10 min. Après 48h, le milieu réactionnel est refroidi à température ambiante et 150 ml de THF et 25 ml de n-butylamine sont ajoutés. Le milieu réactionnel est maintenu à température ambiante pendant 4h, puis 250 ml d'acrylate de butyle sont ajoutés. L'agitation est maintenue pendant 18h à température ambiante.

Le produit est alors précipité dans 2L de méthanol puis, après décantation, le surnageant est éliminé. Le polymère précipité est dissout dans du THF, puis précipité à nouveau dans 2L de méthanol. L'opération est répétée une troisième fois. Le polymère est dissout dans un volume minimal de THF, puis 1000 g d'huile de base de groupe III sont ajoutés au polymère. Les solvants résiduels sont éliminés par un entraînement à l'azote sous agitation mécanique de la solution et 1355,6 g de polydiol p-Diol sont obtenus. Taux de dilution = 25,4% de polymère.

*Caractérisation* :

Le polymère ainsi obtenu et dilué comprend 68% molaire d'unités répétitives StMA/LaurylMA, 25% molaire d'unités répétitives de styrène et 7% molaire d'unités répétitives d'hexane diol MA (mono-Diol) tel que déterminé par RMN $^{13}C$ (100 MHz, $CDCl_3$).

Le polymère présente une masse molaire moyenne en nombre d'approximativement 40000 $g.mol^{-1}$ et un indice de polydispersité de 1,46 tels que déterminés par SEC dans le THF en utilisant une calibration poly(méthacrylate de méthyle) à 40°C.

1.5. Synthèse de polymère poly(ester boronique) p-EB (comparatif)

La synthèse du polymère poly(ester boronique) p-EB s'effectue selon le schéma réactionnel suivant :

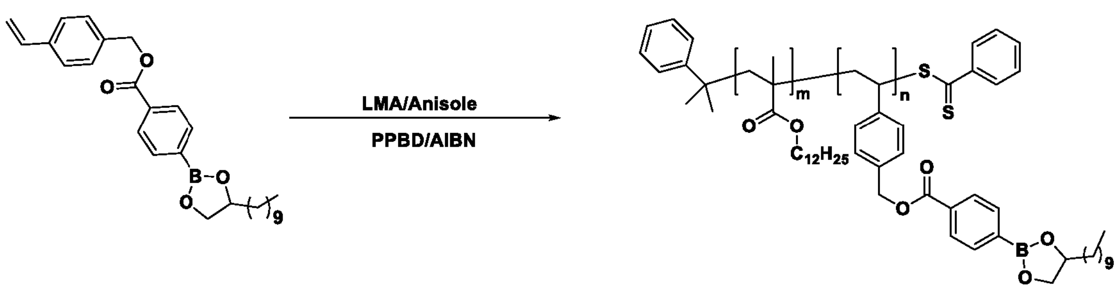


Dans un réacteur de 2L connecté à un réfrigérant et à une arrivée d'azote sont introduits :1L d'anisole, 3,56 g d'une solution de dithiobenzoate de cumyle, 900 g de méthacrylate de lauryle et 76 g de mono-EB. Le milieu réactionnel est placé sous atmosphère d'azote, agité et chauffé à 90 °C. Le milieu réactionnel est chauffé sous agitation à T = 90 °C. La progression de la réaction est suivie par analyse SEC. Après 2h30 de polymérisation, le milieu réactionnel est refroidi à 0°C et le produit est précipité dans 4L d'acétone puis, après décantation, le surnageant est éliminé. Le polymère précipité est dissout dans du THF, puis précipité à nouveau dans 4L d'acétone. L'opération est répétée une dernière

fois. Le polymère est ensuite dissout dans un volume minimal de THF, puis 900 g d'huile de base de groupe III est ajoutée au polymère. Les solvants résiduels sont éliminés par un entraînement à l'azote sous agitation mécanique de la solution et 1381,0 g de poly(ester boronique) p-EB sont obtenus. Taux de dilution= 39,2% de polymère.

*Caractérisation :*

Le polymère ainsi obtenu et dilué comprend 94% molaire d'unités répétitives laurylMA, et 6% molaire d'unités répétitives d'ester boronique tel que déterminé par RMN $^{13}C$ (100 MHz, $CDCl_3$).

Le polymère présente une masse molaire moyenne en nombre d'approximativement 45000 $g.mol^{-1}$ et un indice de polydispersité de 1,39 tels que déterminés par SEC dans le THF en utilisant une calibration poly(méthacrylate de méthyle) à 40°C

**2. Formulation des compositions**

Chaque oligomère/polymère est dissout dans une huile de base pour obtenir une solution à 10 % massique en oligomère/polymère pur. Après dissolution de l'oligomère/polymère dans l'huile sous agitation magnétique et chauffage à 80°C, ces solutions sont filtrées si besoin sous filtre millipore de 0,8 $\mu$m. Elles servent de solutions mères pour la préparation des formulations ci-après.

2.1. Huile de base lubrifiante

L'huile de base lubrifiante utilisée dans les compositions à tester est une huile du groupe III de la classification API, commercialisée par SK sous le nom Yubase 4+.

Elle présente les caractéristiques suivantes :

- Sa viscosité cinématique à 40°C mesurée selon la norme ASTM D445 est de 18,51 cSt;
- Sa viscosité cinématique mesurée à 100°C selon la norme ASTM D445 est de 4,206 cSt ;
- Son indice de viscosité mesuré selon la norme ASTM D2270 est de 135 ;
- Sa volatilité Noack en pourcentage poids, mesurée selon la norme CEC L-40-93 est de 13,4% masse ;
- Son point flash (flash point en anglais) en degré Celsius mesuré selon la norme NF EN ISO 2592 est de 234°C ;
- Son point d'écoulement (pour point en anglais) en degré Celsius mesuré selon la norme NF T60-105 est de -18 °C.

2.2. Préparation de la composition A (selon l'invention)

8,00 g de la solution mère à 10 % massique d'oligomère ester boronique o-EB-1 et 8,00 g de la solution mère à 10 % massique d'oligomère o-Diol-2, sont introduits dans un flacon et mélangés à l'aide d'un agitateur magnétique pendant 5 minutes. Cette formulation contient donc 5 % massique d'oligomère ester boronique o-EB-1 et 5% massique d'oligomère o-Diol-2.

2.3. Préparation de la composition B (selon l'invention)

La quantité des composés de la préparation est ajustée de sorte que cette formulation contienne 5 % massique de la molécule diester boronique Di-EB et 10% massique d'oligomère o-Diol-2.

2.4. Préparation de la composition F (comparative)

5,2 g de la solution mère à 10 % massique du polymère poly(ester boronique) p-EB, 4,5 g de la solution mère à 10 % massique du polymère polydiol p-Diol et 10,3 g d'huile de base de groupe III, sont introduits dans un flacon et mélangés à l'aide d'un agitateur magnétique pendant 5 minutes. Cette formulation contient donc 2,6% massique de poly(ester boronique) p-EB et 2,25% massique de polydiol p-Diol.

**3. Etudes rhéologiques**

3.1. Appareillage et protocoles de mesure

➢ *Mesures sous cisaillement* :

Les viscosités dynamiques à bas taux de cisaillements (10, 100, 1000, 5000 et 10000 $s^{-1}$) ont été mesurées

à 40°C, 100°C et 150°C en régime stabilisé par un rhéomètre DHR-2 de la société TA Instruments équipé de géométrie cône-plan (0,5°- 40mm).

Les viscosités dynamiques à hauts taux de cisaillements (1, 2, 3, 4 $*10^6$ $s^{-1}$ à 40°C et 1, 4, 7, $10*10^6$ $s^{-1}$ à 100°C et 150°C) ont été mesurées par un viscosimètre à hauts taux de cisaillements USV de la société PCS Instruments.

➢ *Test de dégradation mécanique* :

Le test de dégradation mécanique KRL a été effectué à 60°C pendant 20 heures selon la norme CEC L-45-A-99 et les viscosités cinématiques ont été mesurées avant et après test KRL. La viscosité cinématique des compositions A et F et l'huile de base de groupe III a été mesurée à 40°C et 100°C par un viscosimètre capillaire de la société Herzog selon la norme ASTM D445.

➢ *Mesures de viscosités cinématiques* :

La viscosité cinématique de la composition B et de l'huile de base de groupe III a été mesurée à 40°C et 100°C par un viscosimètre capillaire de la société Herzog selon la norme ASTM D445.

3.2. Résultats

➢ *Mesures sous cisaillement* :

Les figures 5, 6 et 7 représentent les courbes de variation de la viscosité dynamique mesurée en fonction du taux de cisaillement respectivement à 40, 100 et 150 °C pour la composition A selon l'invention et la composition F.

Lorsque le taux de cisaillement est faible (jusqu'à 10000 $s^{-1}$), le comportement rhéologique des formulations A et F est identique. Lorsqu'un haut taux de cisaillement est appliqué, la composition F montre une chute significative de la viscosité dynamique ; ce comportement montre une faible résistance au cisaillement des polymères de hautes masses molaires. La composition A, comprenant l'association des oligomères selon l'invention, montre une stabilité de la viscosité à haut taux de cisaillement à 40, 100 °C et même à température élevée jusqu'à 150 °C. Ceci illustre l'effet technique de la capacité du mélange d'oligomères revendiqué d'épaissir le milieu dans lequel il est dispersé et de conserver cette capacité sous cisaillement à des températures élevées.

➢ *Dégradation mécanique* :

La viscosité cinématique des compositions A et F a été mesurée à 40 et 100 °C avant et après le test de dégradation mécanique KRL 20 heures. Les résultats obtenus sont résumés dans le tableau 2.1.

La composition F comprenant 2,6% massique de poly(ester boronique) p-EB et 2,25% massique de polydiol p-Diol montre une perte de viscosité irréversible après cisaillement pour les températures 40 et 100°C. Lorsque la composition A, contenant l'association des oligomères o-Diol-2 et o-EB-1 selon l'invention est utilisée, aucune perte significative de la viscosité n'est observée. Cette composition conserve toujours ses propriétés à des températures élevées. Ces résultats montrent une meilleure tenue à la dégradation mécanique de la composition A selon l'invention comparativement à la composition F comprenant des polymères de hautes masses molaires.

La stabilité au cisaillement caractérisée par le PSSI (Permanent Shear Stability Index, ou Indice de Stabilité en Cisaillement Permanent) a été calculée à partir des viscosités cinématiques des compositions dans l'huile après le processus de cisaillement KRL 20 heures à 40 et à 100°C selon la formule mathématique suivante :

$$PSSI = [(KV\ initiale - KV\ après\ KRL) / (KV\ initiale - KV\ huile\ de\ base)] \times 100$$

La composition F présente un indice permanent de stabilité en cisaillement supérieur à 40%. Cela indique que certaines molécules de polymère de hautes masses molaires sont détruites sous contrainte de cisaillement mécanique conduisant à une perte de viscosité irréversible de la formulation étudiée. En revanche, la composition A présente un PSSI de seulement 2% à 40 °C et de 1% à 100 °C. Ceci montre le comportement peu sensible au cisaillement des formulations selon l'invention et leur résistance à la dégradation mécanique.

Tableau 2.1 : Résultats de mesure de la viscosité cinématique à 40 et 100 °C avant et après le test de dégradation mécanique KRL 20 heures pour la composition A selon l'invention et la composition F

| | Huile de base groupe III | Composition A | Composition F |
|---|---|---|---|
| viscosités cinématiques initiales mesurées | | | |
| KV40 en $mm^2/s$ | 18,51 | 23,92 | 31,95 |
| KV100 en $mm^2/s$ | 4,206 | 5,264 | 8,765 |
| VI | 135 | 161 | 274 |
| viscosités cinématiques mesurées après essai de cisaillement KRL | | | |
| KV40 en $mm^2/s$ | | 23,8 | 26,16 |
| KV100 en $mm^2/s$ | | 5,25 | 6,135 |
| VI | | 161 | 196 |
| PSSI 40 en % | | 2 | 43 |
| PSSI 100 en % | | 1 | 58 |

➢ *Mesures de viscosités cinématiques* :

La viscosité cinématique de la composition B et l'huile de base de groupe III a été mesurée à 40°C et 100°C. Les résultats obtenus sont résumés dans le tableau 2.2.

La composition B comprenant 5 % massique de la molécule diester boronique Di-EB et 10% massique d'oligomère o-Diol-2 montre une viscosité cinématique à 40 et 100°C augmentée. L'augmentation de viscosité est plus particulièrement observée à chaud, l'indice de viscosité est ainsi grandement amélioré.

Tableau 2.2 : Résultats de mesure de la viscosité cinématique à 40 et 100 °C pour la composition B selon l'invention

| | Huile de base groupe III | Composition B |
|---|---|---|
| viscosités cinématiques mesurées | | |
| KV40 en $mm^2/s$ | 18,51 | 23,02 |
| KV100 en $mm^2/s$ | 4,206 | 5,004 |
| VI | 135 | 150 |

## Revendications

**1.** Composition résultant du mélange d'au moins

◦ un oligomère polydiol A1 de masse molaire moyenne en nombre supérieure ou égale à 600 g/mol et inférieure à 10 000 g/mol, telle que déterminée par la méthode décrite dans la description, comprenant des unités répétitives correspondant à :

- au moins deux monomères M1,
et
- au moins un monomère M2, ou
- au moins un monomère M3, ou
- au moins un monomère M2 et au moins un monomère M3,
et l'oligomère A1 comprend moins de 2 % molaire d'unités répétitives correspondant à un ou plusieurs monomères M3,
et

◦ un composé A2 comprenant au moins deux fonctions ester boronique,

- le monomère M1 répondant à la formule générale (1) :

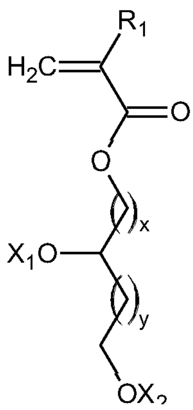

(I)

dans laquelle :

- $R_1$ est choisi parmi le groupe formé par -H, $-CH_3$, et $-CH_2-CH_3$ ;
- x est un nombre entier allant de 1 à 18, de préférence de 2 à 18 ;
- y est un nombre entier égal à 0 ou 1;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ; ou bien
- $X_1$ et $X_2$ forment avec les atomes d'oxygène un pont de formule suivante

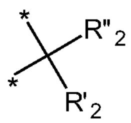

dans laquelle:

- les étoiles (*) symbolisent les liaisons aux atomes d'oxygène,
- $R'_2$ et $R''_2$, identiques ou différents, sont choisis parmi le groupe formé par l'hydrogène et un alkyle en $C_1$-$C_{11}$, de préférence le méthyle ;

ou bien

- $X_1$ et $X_2$ forment avec les atomes d'oxygène un ester boronique de formule suivante :

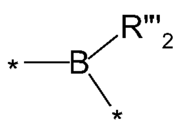

dans laquelle :

- les étoiles (*) symbolisent les liaisons aux atomes d'oxygène,
- $R'''_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$,

- le monomère M2 répondant à la formule générale (II) :

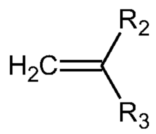

(II)

dans laquelle :

- $R_2$ est choisi parmi le groupe formé par -H, $-CH_3$ et $-CH_2-CH_3$,
- $R_3$ est choisi parmi le groupe formé par : -C(O)-O-R'$_3$ ; -O-R'$_3$; -S-R'$_3$ et -C(O)-N(H)-R'$_3$ avec R'$_3$ un groupe alkyle en $C_1$-$C_{30}$,

- le monomère M3 répondant à la formule générale (X) :

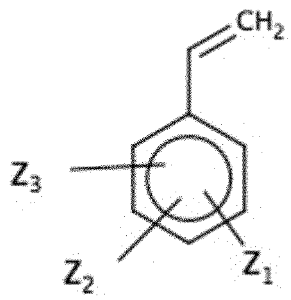

(X)

dans laquelle :

- $Z_1$, $Z_2$, $Z_3$, identiques ou différents, représentent des groupements choisis parmi un atome d'hydrogène, un alkyle en $C_1$-$C_{12}$, un groupement -OZ', -C(O)-O-Z' avec Z' un alkyle en $C_1$-$C_{12}$.

**2.** Composition selon la revendication 1 dans laquelle l'oligomère A1 présente une masse molaire moyenne en nombre allant de 600 g/mol à 9500 g/mol, telle que déterminée par la méthode décrite dans la description.

**3.** Composition selon la revendication 1 ou selon la revendication 2, dans laquelle l'oligomère A1 comprend moins de 1,5 % molaire d'unités répétitives correspondant à un ou plusieurs monomères M3 de formule générale (X).

**4.** Composition selon l'une quelconque des revendications précédentes, dans laquelle le monomère M3 est le styrène.

**5.** Composition selon l'une quelconque des revendications précédentes, dans laquelle les chaînes latérales de l'oligomère A1 ont une longueur moyenne allant de 8 à 20 atomes de carbone, de préférence de 9 à 18 atomes de carbone.

**6.** Composition selon l'une quelconque des revendications précédentes, dans laquelle l'oligomère A1 comprend un pourcentage molaire d'unités répétitives correspondant au monomère M1 de formule (1) allant de 2 à 70%, de préférence de 4 à 50%.

**7.** Composition selon l'une quelconque des revendications précédentes dans laquelle le composé A2 est un composé de formule (III) :

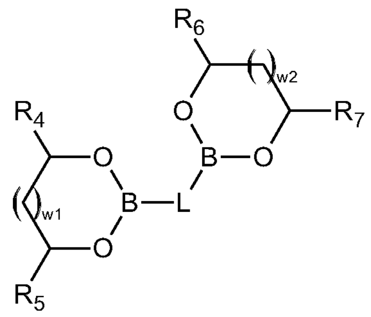

(III)

dans laquelle :

- $w_1$ et $w_2$, identiques ou différents sont des nombres entiers choisis entre 0 et 1 ;
- $R_4$, $R_5$, $R_6$ et $R_7$, identiques ou différents représentent un groupement choisi parmi un atome d'hydrogène, un groupement hydrocarboné comprenant de 1 à 30 atomes de carbone, éventuellement substitué par un ou plusieurs groupements choisis parmi : un hydroxyle, un groupement -OJ, -C(O)-O-J avec J un groupement hydrocarboné comprenant de 1 à 24 atomes de carbone ;
- L est un groupement de liaison divalent et choisi parmi le groupe formé par un aryle en $C_6$-$C_{18}$, un aralkyle en $C_6$-$C_{18}$ et une chaîne hydrocarbonée en $C_2$-$C_{24}$.

**8.** Composition selon l'une quelconque des revendications 1 à 6 dans laquelle le composé A2 est un oligomère comprenant des unités répétitives qui correspondent à

- au moins deux monomères M4 de formule (IV) :

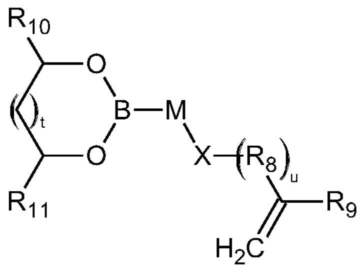

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, choisis parmi le groupe formé par un aryle en $C_6$-$C_{18}$, un aralkyle en $C_7$-$C_{24}$ et un alkyle en $C_2$-$C_{24}$, de préférence un aryle en $C_6$-$C_{18}$,
- X est une fonction choisie parmi le groupe formé par -O-C(O)-, - C(O)-O-, -C(O)-N(H)-, -N(H)-C(O)-, -S-, -N(H)-, -N(R'$_4$)- et -O- avec R'$_4$ une chaîne hydrocarbonée comprenant de 1 à 15 atomes de carbone;
- $R_9$ est choisi parmi le groupe formé par -H, $-CH_3$ et $-CH_2$-$CH_3$ ;
- $R_{10}$ et Ru identiques ou différents représentent un groupement choisi parmi un atome d'hydrogène, un groupement hydrocarboné comprenant de 1 à 30 atomes de carbone, éventuellement substitué par un ou plusieurs groupements choisis parmi : un hydroxyle, un groupement -OJ, -C(O)-O-J avec J un groupement hydrocarboné comprenant de 1 à 24 atomes de carbone ; et

- Eventuellement, au moins un monomère M5 de formule générale (V) :

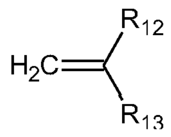

(V)

dans laquelle :

- $R_{12}$ est choisi parmi le groupe formé par -H, $-CH_3$ et $-CH_2-CH_3$,
- $R_{13}$ est choisi parmi le groupe formé par -C(O)-O-R'$_{13}$ ; -O-R'$_{13}$, -S-R'$_{13}$ et
- C(O)-N(H)-R'$_{13}$ avec R'$_{13}$ un groupe alkyle en $C_1$-$C_{30}$,

▪ Eventuellement, au moins un monomère M3 de formule générale (X)

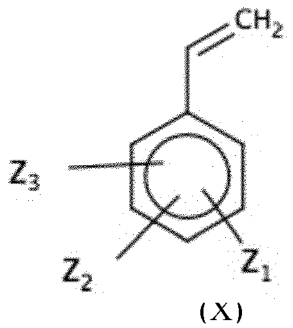

(X)

dans laquelle :
$Z_1$, $Z_2$, $Z_3$, identiques ou différents, représentent, des groupements choisis parmi un atome d'hydrogène, un alkyle en $C_1$-$C_{12}$, un groupement -OZ', -C(O)-O-Z' avec Z' un alkyle en $C_1$-$C_{12}$.

**9.** Composition selon la revendication 8 dans laquelle l'oligomère A2 présente une masse molaire moyenne en nombre allant de 600 g/mol à moins de 10 000 g/mol, de préférence de 600 à 9500 g/mol, telle que déterminée par la méthode décrite dans la description.

**10.** Composition selon la revendication 8, dans laquelle l'oligomère A2 a un pourcentage molaire de monomère M4 de formule (IV) dans ledit oligomère allant de 4 à 50%, de préférence de 4 à 30%.

**11.** Composition selon l'une des revendications précédentes, dans laquelle le ratio massique entre l'oligomère A1 et le composé A2 (ratio A1/A2) va de 0,002 à 500, de préférence de 0,05 à 20, de manière encore plus préférée de 0,1 à 10.

**12.** Composition lubrifiante résultant du mélange d'au moins :

- d'une huile lubrifiante ; et
- d'une composition définie selon l'une quelconque des revendications 1 à 11.

**13.** Utilisation d'une composition lubrifiante selon la revendication 12 pour réduire la consommation de carburant de véhicules.

**14.** Procédé de réduction des pertes d'énergie par frottement d'une pièce mécanique comprenant au moins une étape de mise en contact d'une pièce mécanique avec une composition lubrifiante selon la revendication 12.

**15.** Procédé pour réduire la consommation de carburant d'un véhicule comprenant au moins une étape de mise en contact d'une pièce mécanique du moteur du véhicule avec une composition lubrifiante selon la revendication 12.

## Patentansprüche

1. Zusammensetzung, die aus dem Mischen von mindestens Folgendem resultiert:

o einem Polydiol-Oligomer A1 mit einer zahlenmittleren Molmasse größer als oder gleich 600 g/mol und kleiner als 10.000 g/mol gemäß Bestimmung nach der in der Beschreibung beschriebenen Methode, umfassend Wiederholungseinheiten, die

- mindestens zwei Monomeren M1 und
- mindestens einem Monomer M2 oder
- mindestens einem Monomer M3 oder
- mindestens einem Monomer M2 und mindestens einem Monomer M3

entsprechen, wobei das Oligomer A1 mindestens 2 Mol-% Wiederholungseinheiten, die einem oder mehreren Monomeren M3 entsprechen, umfasst,
und

◦ einer Verbindung A2, die mindestens zwei Boronsäureesterfunktionen umfasst,

■ wobei das Monomer M1 der allgemeinen Formel (I) entspricht:

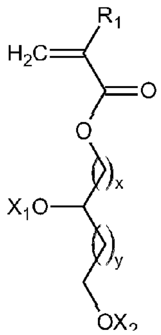

(I)

in der:

- $R_1$ aus der Gruppe bestehend aus -H, $-CH_3$ und $-CH_2-CH_3$ ausgewählt ist;
- x eine ganze Zahl im Bereich von 1 bis 18, vorzugsweise von 2 bis 18, ist;
- y eine ganze Zahl mit einem Wert von 0 oder 1 ist;
- $X_1$ und $X_2$ gleich oder verschieden sind und aus der Gruppe bestehend aus Wasserstoff, Tetrahydropyranyl, Methoxymethyl, tert-Butyl, Benzyl, trimethylsilyl und t-Butyldimethylsilyl ausgewählt sind;

oder auch

- $X_1$ und $X_2$ mit den Sauerstoffatomen eine Brücke der folgenden Formel bilden:

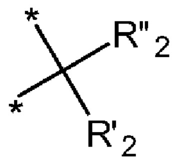

in der:

- die Sterne (*) die Bindungen an die Sauerstoffatome symbolisieren,
- $R'_2$ und $R''_2$ gleich oder verschieden sind und aus der Gruppe bestehend aus Wasserstoff und einem $C_1$-$C_{11}$-Alkyl, vorzugsweise Methyl, ausgewählt sind;

oder auch

$X_1$ und $X_2$ mit den Sauerstoffatomen einen Boronsäureester der folgenden Formel bilden:

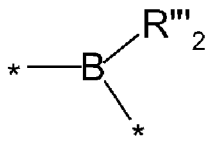

in der:

- die Sterne (*) die Bindungen an die Sauerstoffatome symbolisieren,
- R‴$_2$ aus der Gruppe bestehend aus einem $C_6$-$C_{30}$-Aryl, einem $C_7$-$C_{30}$-Aralkyl und einem $C_2$-$C_{30}$-Alkyl, vorzugsweise einem $C_6$-$C_{18}$-Aryl, ausgewählt ist;

- wobei das Monomer M2 der allgemeinen Formel (II) entspricht:

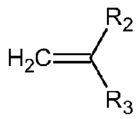

(II)

in der:

- $R_2$ aus der Gruppe bestehend aus -H, $-CH_3$ und $-CH_2$-$CH_3$ ausgewählt ist;
- $R_3$ aus der Gruppe bestehend aus -C(O)-O-R'$_3$; -O-R'$_3$; -S-R'$_3$ und -C(O)-N(H)-R'$_3$ ausgewählt ist, wobei R'$_3$ eine $C_1$-$C_{30}$-Alkylgruppe ist,

- wobei das Monomer M3 der allgemeinen Formel (X) entspricht:

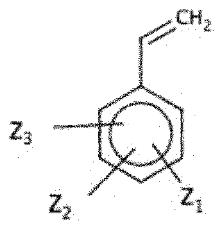

(X)

in der:

- $Z_1$, $Z_2$ und $Z_3$ gleich oder verschieden sind und für Gruppen stehen, die aus einem Wasserstoffatom, einem $C_1$-$C_{12}$-Alkyl oder einer -OZ'- oder -C(O)-O-Z'-Gruppe ausgewählt sind, wobei Z' ein $C_1$-$C_{12}$-Alkyl ist.

**2.** Zusammensetzung nach Anspruch 1, wobei das Oligomer A1 eine zahlenmittlere Molmasse im Bereich von 600 g/mol bis 9500 g/mol gemäß Bestimmung nach der in der Beschreibung beschriebenen Methode aufweist.

**3.** Zusammensetzung nach Anspruch 1 oder nach Anspruch 2, wobei das Oligomer A1 mindestens 1,5 Mol-% Wiederholungseinheiten, die einem oder mehreren Monomeren M3 der allgemeinen Formel (X) entsprechen, umfasst.

**4.** Zusammensetzung nach einem der vorhergehenden Ansprüche, wobei es sich bei dem Monomer M3 um Styrol handelt.

**5.** Zusammensetzung nach einem der vorhergehenden Ansprüche, wobei die Seitenketten des Oligomers A1 eine mittlere Länge im Bereich von 8 bis 20 Kohlenstoffatomen, vorzugsweise von 9 bis 18 Kohlenstoffatomen, haben.

**6.** Zusammensetzung nach einem der vorhergehenden Ansprüche, wobei das Oligomer A1 einen Molprozentanteil

von Monomer M1 der Formel (I) im Bereich von 2 bis 70 %, vorzugsweise von 4 bis 50 %, aufweist.

**7.** Zusammensetzung nach einem der vorhergehenden Ansprüche, wobei es sich bei der Verbindung A2 um eine Verbindung der Formel (III) handelt:

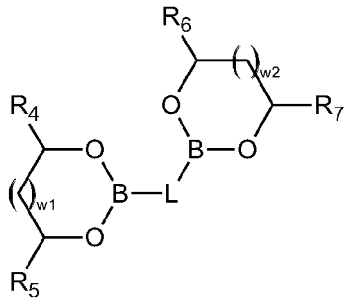

(III)

in der:

- $w_1$ und $w_2$ gleich oder verschieden sind und ganze Zahlen sind, die zwischen 0 und 1 ausgewählt sind;
- $R_4$, $R_5$, $R_6$ und $R_7$ gleich oder verschieden sind und für eine Gruppe stehen, die aus einem Wasserstoffatom und einer Kohlenwasserstoffgruppe mit 1 bis 30 Kohlenstoffatomen, die gegebenenfalls durch eine oder mehrere Gruppen, die aus einem Hydroxyl oder einer -OJ- oder -C(O)-O-J-Gruppe ausgewählt sind, substituiert ist, ausgewählt ist, wobei J für eine Kohlenwasserstoffgruppe mit 1 bis 24 Kohlenstoffatomen steht;
- L eine zweiwertige Verbindungsgruppe ist, die aus der Gruppe bestehend aus einem $C_6$-$C_{18}$-Aryl, einem $C_6$-$C_{18}$-Aralkyl und einer $C_2$-$C_{24}$-Kohlenwasserstoffkette ausgewählt ist.

**8.** Zusammensetzung nach einem der Ansprüche 1 bis 6, wobei es sich bei der Verbindung A2 um ein Oligomer handelt, das Wiederholungseinheiten umfasst, die

- mindestens zwei Monomeren M4 der Formel (IV):

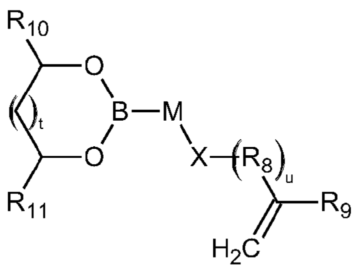

(IV)

in der:

- t eine ganze Zahl mit einem Wert von 0 oder 1 ist;
- u eine ganze Zahl mit einem Wert von 0 oder 1 ist;
- M und $R_8$ gleiche oder verschiedene zweiwertige Verbindungsgruppen sind, die aus der Gruppe bestehend aus einem $C_6$-$C_{18}$-Aryl, einem $C_7$-$C_{24}$-Aralkyl und einem $C_2$-$C_{24}$-Alkyl, vorzugsweise einem $C_6$-$C_{18}$-Aryl, ausgewählt sind;
- X eine Funktion ist, die aus der Gruppe bestehend aus -O-C(O)-, -C(O)-O-, -C(O)-N(H)-, -N(H)-C(O)-, -S-, -N(H)-, -N(R'$_4$) und -O- ausgewählt ist, wobei R'$_4$ eine Kohlenwasserstoffkette mit 1 bis 15 Kohlenstoffatomen ist;
- $R_9$ aus der Gruppe bestehend aus -H, $-CH_3$ und $CH_2$-$CH_3$ ausgewählt ist;
- $R_{10}$ und $R_{11}$ gleich oder verschieden sind und für eine Gruppe stehen, die aus einem Wasserstoffatom oder einer Kohlenwasserstoffgruppe mit 1 bis 30 Kohlenstoffatomen, die gegebenenfalls durch eine oder mehrere Gruppen, die aus einem Hydroxyl oder einer -OJ- oder -C(O)-O-J-Gruppe ausgewählt sind, substituiert ist, ausgewählt ist, wobei J für eine Kohlenwasserstoffgruppe mit 1 bis 24 Kohlenstoffatomen steht; und

- gegebenenfalls mindestens einem Monomer M5 der allgemeinen Formel (V):

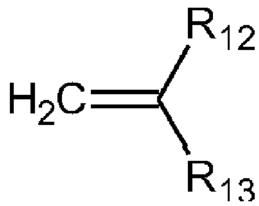

(V)

in der:

- $R_{12}$ aus der Gruppe bestehend aus -H, $-CH_3$ und $-CH_2-CH_3$ ausgewählt ist;
- $R_{13}$ aus der Gruppe bestehend aus -C(O)-O-R'$_{13}$ -O-R'$_{13}$; -S-R'$_{13}$ und -C(O)-N(H)-R'$_{13}$ ausgewählt ist, wobei R'$_{13}$ eine $C_1$-$C_{30}$-Alkylgruppe ist,

- gegebenenfalls mindestens einem Monomer M3 der allgemeinen Formel (X):

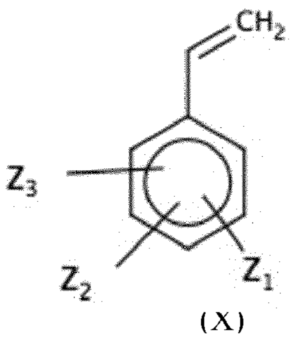

(X)

in der:

- $Z_1$, $Z_2$ und $Z_3$ gleich oder verschieden sind und für Gruppen stehen, die aus einem Wasserstoffatom, einem $C_1$-$C_{12}$-Alkyl oder einer -OZ'- oder -C(O)-O-Z'-Gruppe ausgewählt sind, wobei Z' ein $C_1$-$C_{12}$-Alkyl ist; entsprechen.

**9.** Zusammensetzung nach Anspruch 8, wobei das Oligomer A2 eine zahlenmittlere Molmasse im Bereich von 600 g/mol bis weniger als 10.000 g/mol, vorzugsweise von 600 bis 9500 g/mol, gemäß Bestimmung nach der in der Beschreibung beschriebenen Methode aufweist.

**10.** Zusammensetzung nach Anspruch 8, wobei das Oligomer A2 einen Molprozentanteil von Monomer M4 der Formel (IV) im Bereich von 4 bis 50 %, vorzugsweise von 4 bis 30 %, aufweist.

**11.** Zusammensetzung nach einem der vorhergehenden Ansprüche, wobei das Massenverhältnis zwischen dem Oligomer A1 und der Verbindung A2 (A1/A2-Verhältnis) im Bereich von 0,002 bis 500, vorzugsweise von 0,05 bis 20, noch weiter bevorzugt von 0,1 bis 10, liegt.

**12.** Schmiermittelzusammensetzung, die aus dem Mischen von mindestens Folgendem resultiert:

- einem Schmieröl und
- einer Zusammensetzung gemäß einem der Ansprüche 1 bis 11.

**13.** Verwendung einer Schmiermittelzusammensetzung nach Anspruch 12 zur Verringerung des Kraftstoffverbrauchs von Fahrzeugen.

**14.** Verfahren zur Verringerung der Energieverluste durch Reibung eines mechanischen Teils, umfassend mindestens

einen Schritt des Inkontaktbringens eines mechanischen Teils mit einer Schmiermittelzusammensetzung nach Anspruch 12.

**15.** Verfahren zur Verringerung des Kraftstoffverbrauchs eines Fahrzeugs, umfassend mindestens einen Schritt des Inkontaktbringens eines mechanischen Teils des Motors des Fahrzeugs mit einer Schmiermittelzusammensetzung nach Anspruch 12.

**Claims**

**1.** A composition resulting from the mixing of at least

◦ a polydiol oligomer A1 with a number-average molar mass of greater than or equal to 600 g/mol and less than 10 000 g/mol, as determined by the method described in the description, comprising repeating units corresponding to:

- at least two monomers M1,
and
- at least one monomer M2, or
- at least one monomer M3, or
- at least one monomer M2 and at least one monomer M3,
and the oligomer A1 comprises less than 2 mol% of repeating units corresponding to one or more monomers M3,
and

◦ a compound A2 comprising at least two boronic ester functions,

▪ the monomer M1 corresponding to the general formula (I):

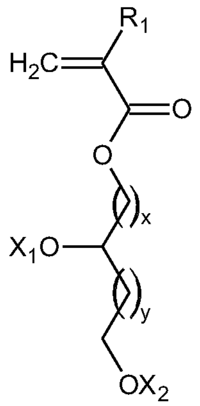

(I)

in which:

- $R_1$ is chosen from the group formed by -H, $-CH_3$ and $-CH_2-CH_3$;
- x is an integer ranging from 1 to 18, preferably from 2 to 18;
- y is an integer equal to 0 or 1;
- $X_1$ and $X_2$, which may be identical or different, are chosen from the group formed by hydrogen, tetrahydropyranyl, methyloxymethyl, tert-butyl, benzyl, trimethylsilyl and t-butyldimethylsilyl;

or

- $X_1$ and $X_2$ form, with the oxygen atoms, a bridge having the following formula

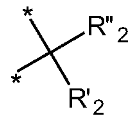

in which:

- the asterisks (*) symbolize the bonds to oxygen atoms,
- $R'_2$ and $R''_2$, which may be identical or different, are chosen from the group formed by hydrogen and a $C_1$-$C_{11}$ alkyl, preferably methyl; or
- $X_1$ and $X_2$ form, with the oxygen atoms, a boronic ester having the following formula:

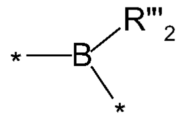

in which:

- the asterisks (*) symbolize the bonds to oxygen atoms,
- $R'''_2$ is chosen from the group formed by a $C_6$-$C_{30}$ aryl, a $C_7$-$C_{30}$ aralkyl and a $C_2$-$C_{30}$ alkyl, preferably a $C_6$-$C_{18}$ aryl;

- the monomer M2 corresponding to the general formula (II):

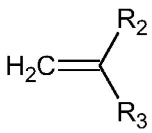

(II)

in which:

- $R_2$ is chosen from the group formed by -H, $-CH_3$ and $-CH_2-CH_3$;
- $R_3$ is chosen from the group formed by: $-C(O)-O-R'_3$; $-O-R'_3$; $-S-R'_3$ and $-C(O)-N(H)-R'_3$ with $R'_3$ a $C_1$-$C_{30}$ alkyl group,

- the monomer M3 corresponding to the general formula (X):

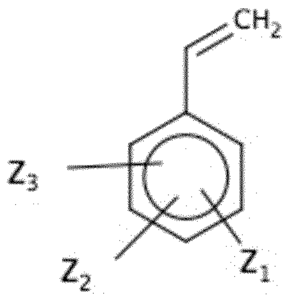

(X)

in which:

- $Z_1$, $Z_2$ and $Z_3$, which may be identical or different, represent groups chosen from a hydrogen atom, a $C_1$-$C_{12}$ alkyl, and a group $-OZ'$ or $-C(O)-O-Z'$ with Z' being a $C_1$-$C_{12}$ alkyl.

2. The composition as claimed in claim 1, in which the oligomer A1 has a number-average molar mass ranging from 600 g/mol to 9500 g/mol, as determined by the method described in the description.

3. The composition as claimed in claim 1 or claim 2, in which the oligomer A1 comprises less than 1.5 mol% of repeating units corresponding to one or more monomers M3 of general formula (X).

4. The composition as claimed in any one of the preceding claims, in which the monomer M3 is styrene.

5. The composition as claimed in any one of the preceding claims, in which the side chains of the oligomer A1 have a mean length ranging from 8 to 20 carbon atoms, preferably from 9 to 18 carbon atoms.

6. The composition as claimed in any one of the preceding claims, in which the oligomer A1 has a molar percentage of repeating units corresponding to the monomer M1 of formula (I) ranging from 2% to 70%, preferably from 4% to 50%.

7. The composition as claimed in any one of the preceding claims, in which compound A2 is a compound of formula (III):

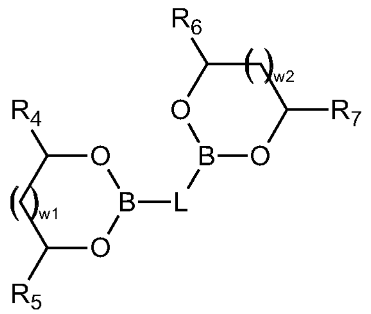

(III)

in which:

- $w_1$ and $w_2$, which may be identical or different, are integers chosen between 0 and 1;
- $R_4$, $R_5$, $R_6$ and $R_7$, which may be identical or different, represent a group chosen from a hydrogen atom, a hydrocarbon-based group comprising from 1 to 30 carbon atoms, optionally substituted with one or more groups chosen from: a hydroxyl, a group -OJ or -C(O)-O-J with J being a hydrocarbon-based group comprising from 1 to 24 carbon atoms;
- L is a divalent bonding group chosen from the group formed by a $C_6$-$C_{18}$ aryl, a $C_6$-$C_{18}$ aralkyl and a $C_2$-$C_{24}$ hydrocarbon-based chain.

8. The composition as claimed in any one of claims 1 to 6, in which compound A2 is an oligomer comprising repeating units which correspond to

- at least two monomers M4 of formula (IV):

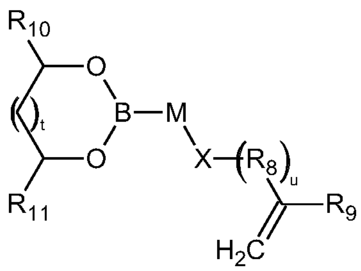

(IV)

in which:

- t is an integer equal to 0 or 1;
- u is an integer equal to 0 or 1;

- M and $R_8$ are identical or different divalent bonding groups, chosen from the group formed by a $C_6$-$C_{18}$ aryl, a $C_7$-$C_{24}$ aralkyl and a $C_2$-$C_{24}$ alkyl, preferably a $C_6$-$C_{18}$ aryl,
- X is a function chosen from the group formed by -O-C(O)- , -C(O)-O-, -C(O)-N(H)-, -N(H)-C(O)-, -S-, -N(H)-, -N(R'$_4$)- and -O- with R'$_4$ being a hydrocarbon-based chain comprising from 1 to 15 carbon atoms;
- $R_9$ is chosen from the group formed by -H, $-CH_3$ and $-CH_2-CH_3$;
- $R_{10}$ and $R_{11}$, which may be identical or different, represent a group chosen from a hydrogen atom, a hydrocarbon-based group comprising from 1 to 30 carbon atoms, optionally substituted with one or more groups chosen from: a hydroxyl, a group -OJ or -C(O)-O-J with J being a hydrocarbon-based group comprising from 1 to 24 carbon atoms; and

▪ optionally at least one monomer M5 of general formula (V):

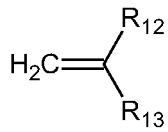

(V)

in which:

- $R_{12}$ is chosen from the group formed by -H, $-CH_3$ and $-CH_2-CH_3$,
- $R_{13}$ is chosen from the group formed by -C(O)-O-R'$_{13}$; -O-R'$_{13}$, -S- R'$_{13}$ and -C(O)-N(H)-R'$_{13}$, with R'$_{13}$ a $C_1$-$C_{30}$ alkyl group,

▪ optionally at least one monomer M3 of general formula (X)

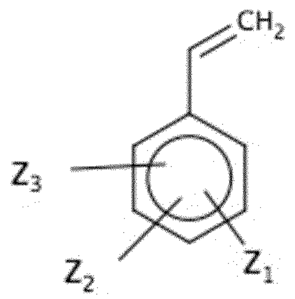

(X)

in which:
$Z_1$, $Z_2$ and $Z_3$, which may be identical or different, represent groups chosen from a hydrogen atom, a $C_1$-$C_{12}$ alkyl, and a group -OZ' or -C(O)-O-Z' with Z' being a $C_1$-$C_{12}$ alkyl.

**9.** The composition as claimed in claim 8, in which the oligomer A2 has a number-average molar mass ranging from 600 g/mol to less than 10 000 g/mol, preferably from 600 to 9500 g/mol, as determined by the method described in the description.

**10.** The composition as claimed in claim 8, wherein the oligomer A2 has a mole percentage of monomer M4 of formula (IV) in said oligomer ranging from 4 to 50%, preferably from 4 to 30%.

**11.** The composition as claimed in any one of the preceding claims, wherein the mass ratio between the oligomer A1 and the compound A2 (A1/A2 ratio) ranges from 0.002 to 500, preferably from 0.05 to 20, even more preferably from 0.1 to 10.

**12.** A lubricant composition resulting from the mixing of at least:

- a lubricant oil; and
- a composition as defined in any one of claims 1 to 11.

**13.** The use of a lubricant composition as claimed in claim 12, for reducing the fuel consumption of vehicles.

**14.** A process for reducing the energy losses by mechanical part friction, comprising at least one step of placing a mechanical part in contact with a lubricant composition as claimed in claim 12.

**15.** A process for reducing the fuel consumption of a vehicle, comprising at least one step of placing a mechanical part of the vehicle engine in contact with a lubricant composition as claimed in claim 12.

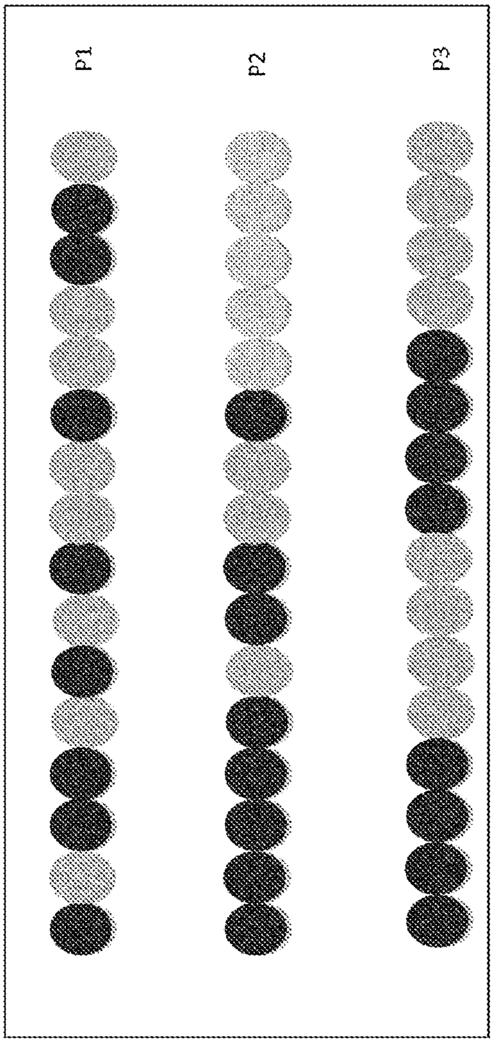


Figure 1

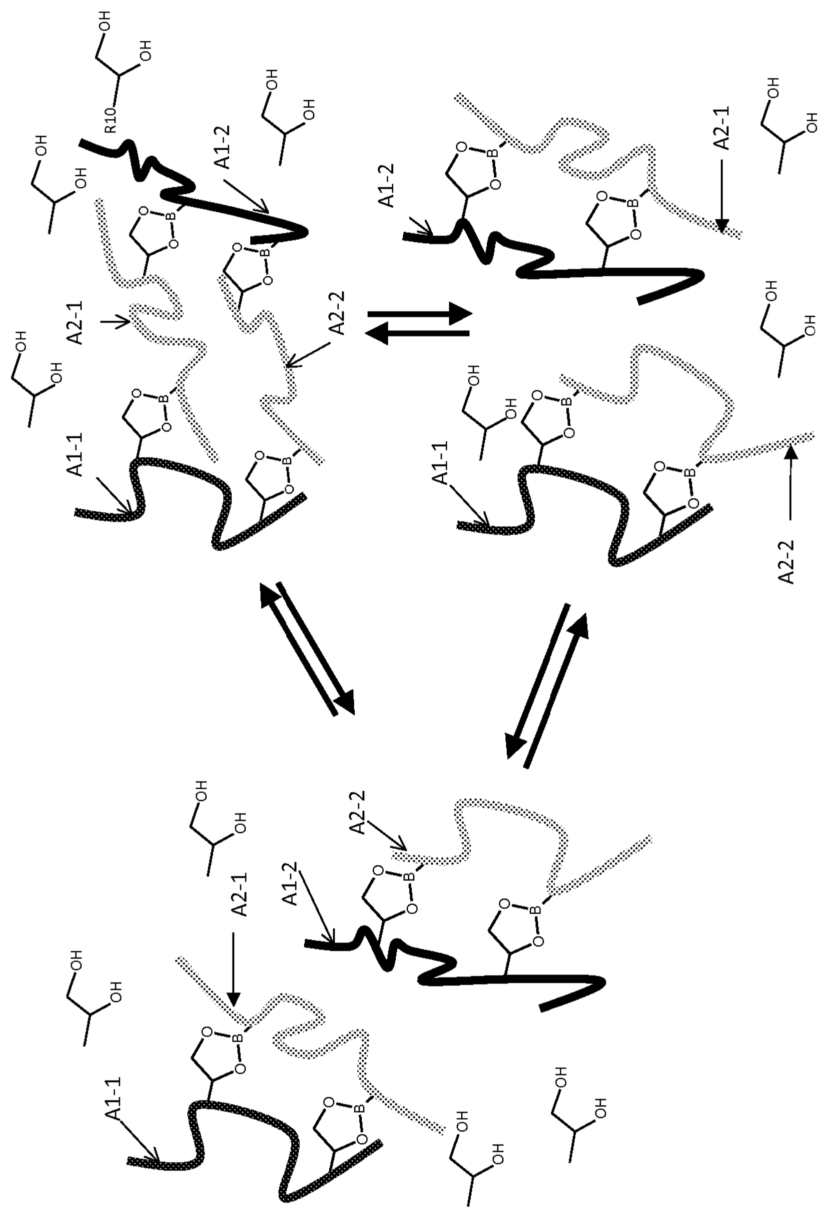

Figure 2

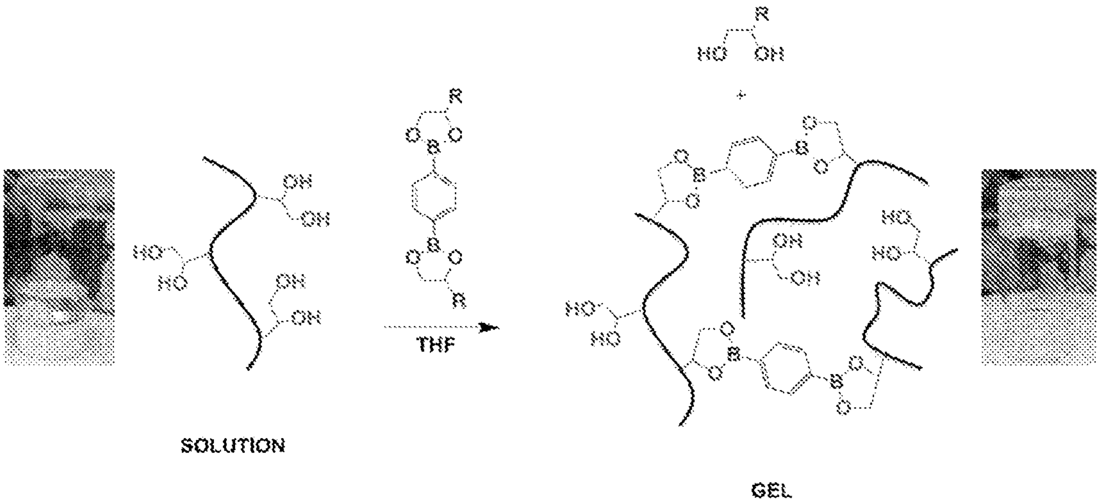


Figure 3

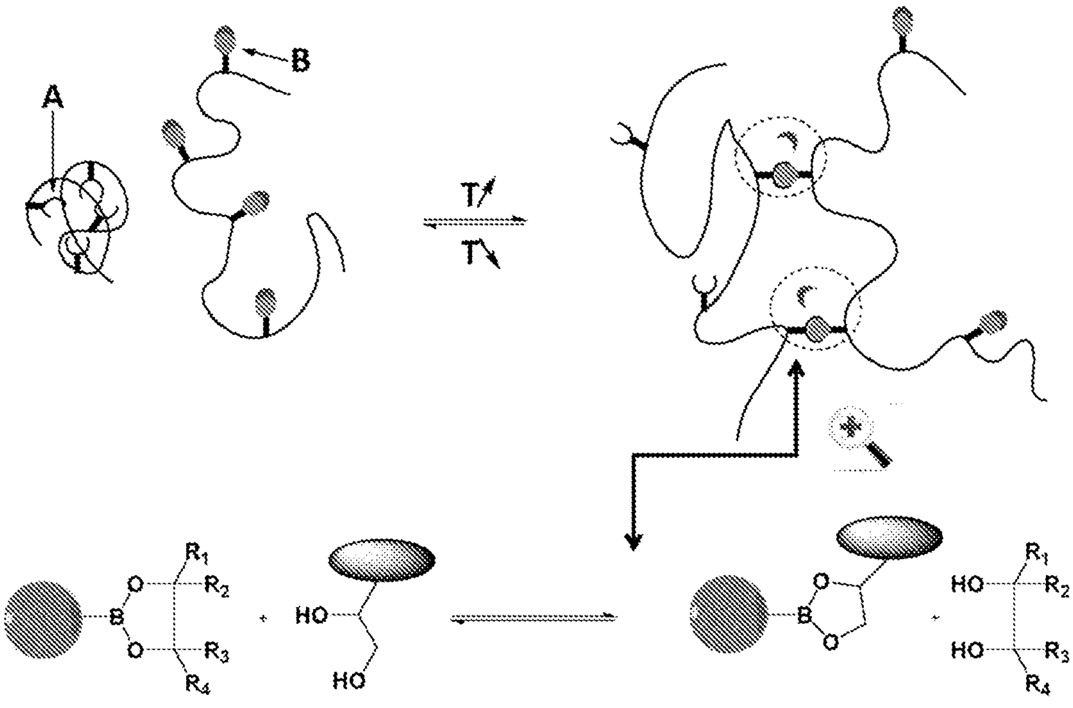


1 2 3

Figure 4

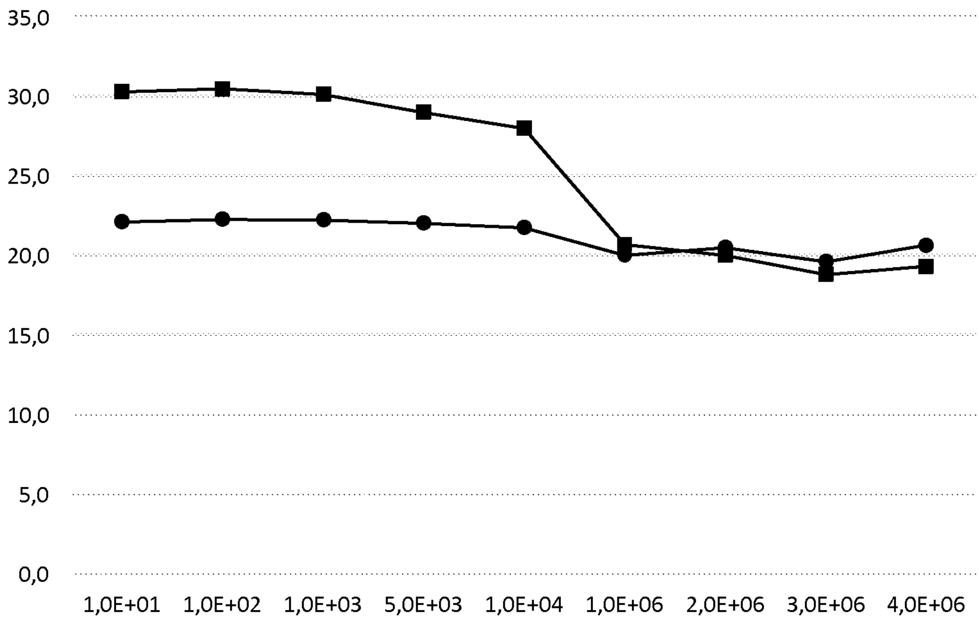


Figure 5

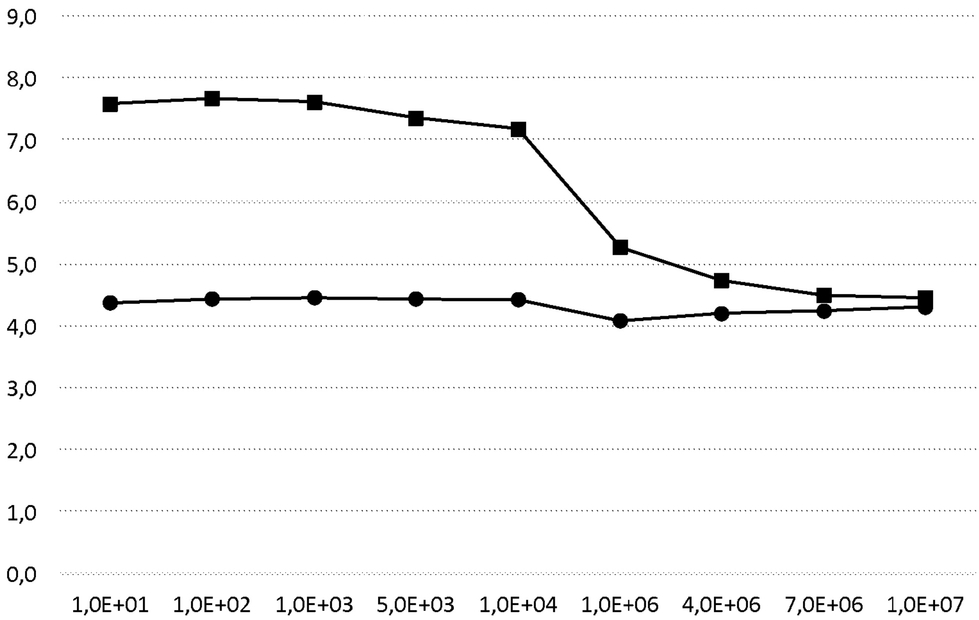


Figure 6

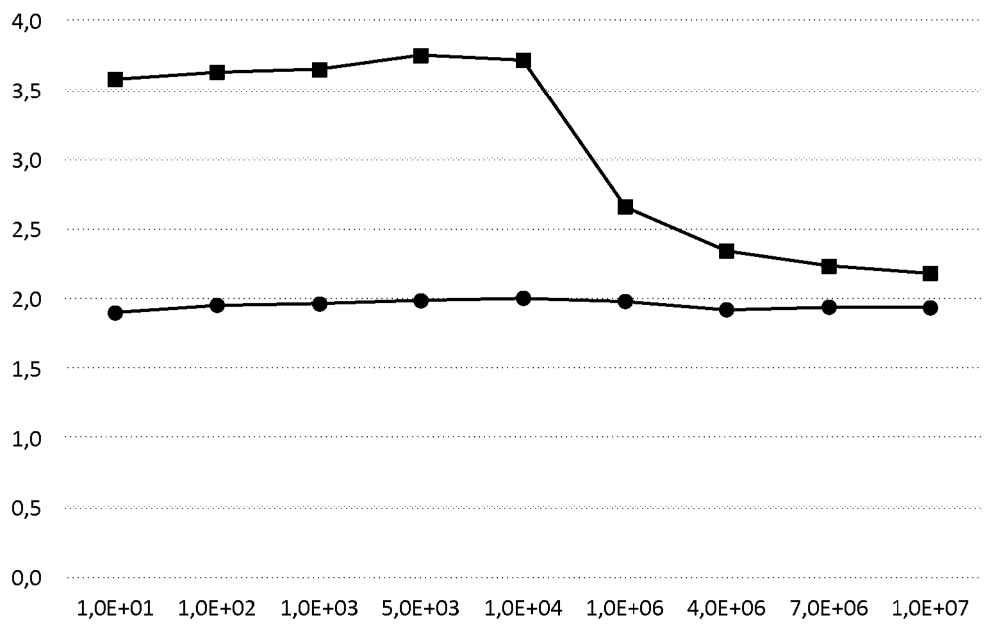
4,0
3,5
3,0
2,5
2,0
1,5
1,0
0,5
0,0
1,0E+01
1,0E+02
1,0E+03
5,0E+03
1,0E+04
1,0E+06
4,0E+06
7,0E+06
1,0E+07

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015110642 A
- WO 2015110643 A
- WO 2016113229 A
- US 5942642 A
- US 5691284 A
- US 4009195 A
- WO 2018096253 A


### Littérature non-brevet citée dans la description


- **MOAD, G. ; SOLOMON, D. H.** The Chemistry of Radical Polymerization. Elsevier Ltd, 2006, 639
- **MATYASZEWSKI, K. ; DAVIS, T. P.** Handbook of Radical Polymerization. Wiley-Interscience, 2002, 936